# EUROPEAN PATENT SPECIFICATION

(11) **EP 3 981 991 B1**
(45) Date of publication and mention of the grant of the patent: **19.07.2023**
(21) Application number: 20819233.6
(22) Date of filing: 28.05.2020
(51) Int. Cl.: F16B 2/10, F01N 13/18, F01N 3/035, F01N 3/28, F16L 23/08, F01N 3/023, F01N 13/00, F16L 23/032

(54) **A VEHICLE BODY COMPRISING A PIPING WITH A FIXING STRUCTURE**
EINE FAHRZEUGKAROSSERIE, DIE EINE ROHRLEITUNG MIT EINER BEFESTIGUNGSSTRUKTUR UMFASST
UNE CARROSSERIE DE VÉHICULE COMPRENANT UNE TUYAUTERIE AVEC UNE STRUCTURE DE FIXATION

(30) Priority: 04.06.2019 JP 2019104665
(43) Date of publication of application: 13.04.2022
(73) Proprietor: KABUSHIKI KAISHA TOYOTA JIDOSHOKKI, Kariya-shi, Aichi 448-8671 (JP)
(72) Inventor: MOTOYAMA, Yuto, Kariya-shi, Aichi 448-8671 (JP)
(74) Representative: Winter, Brandl - Partnerschaft mbB
(86) International application number: PCT/JP2020/021100
(87) International publication number: WO 2020/246361

(56) References cited:
- JP-A- H10 280 947
- JP-A- 2005 076 459
- JP-A- 2008 156 835
- JP-A- 2010 065 559
- JP-A- 2014 122 592
- JP-U- S5 492 425
- KR-B1- 101 571 579
- US-A1- 2008 060 351
- US-A1- 2013 319 787

## Description

### TECHNICAL FIELD

The present disclosure relates to a piping through which an exhaust gas flows from an engine.

### BACKGROUND ART

Regarding the fixing structure of the piping through which an exhaust gas flows from an engine and that needs to be disconnectable, various proposals have been placed. For example, a clamping coupler disclosed in JP 2017 - 207 086 A below includes a plurality of clamping pieces each having a groove of a substantially U- or V-shaped cross section. Disconnectable cylindrical bodies of the piping accommodate an exhaust-gas purification member such as a particulate-matter removing filter that collects and removes the particulate matter (PM) contained in an exhaust gas of a diesel engine. (The above filter is generally called as a diesel particulate filter, and is hereinafter referred to as "DPF".)

Annular flanges are formed at disconnectable ends of the cylindrical bodies adjacent to each other that accommodate the DPF. The flanges of the adjacent cylindrical bodies abut against each other. The clamping pieces of the clamping coupler are wrapped around outer peripheries of the abutting flanges so as to form an annular shape, and the abutting flanges are held to be coupled in grooves of the clamping pieces. Ends of the clamping pieces facing to each other in a circumferential direction and distanced with a predetermined clearance, are fastened with a bolt and a nut so as to be disconnectably fixed.

Further, KR 10 - 1571579 B1 discloses an exhaust gas processing device, which reduces the exhaust sound of the exhaust gas ejected from an engine and removes harmful material included. In JP 2005 - 076 459 A, a further example of an exhaust emission control device is disclosed.

### SUMMARY OF INVENTION

### Technical Problem

However, in the fixing structure of a piping using the clamping coupler disclosed in JP 2017 - 207 086 A, the exhaust gas at a high temperature (for example, 700 to 800 degrees centigrade) flows, and thus the flanges and the clamping pieces are heated to the high temperature (for example, 700 to 800 degrees centigrade) during regeneration of the DPF. Thus, repetitive regeneration of the DPF causes the flanges to stick into the grooves of the clamping pieces of the clamping coupler, which falls into difficulty in easily detaching the clamping pieces from the flanges even after the bolt and nut are loosened.

When the clamping coupler is not easily detached from the flanges, for cleaning the DPF, it is required to take out the entire cylindrical bodies that accommodate the DPF and are coupled by the clamping coupler from a vehicle, through an opening of the vehicle by using a crane or the like for lifting the cylindrical bodies coupled by the clamping coupler. The lifting operation requiring equipment such as the crane increases difficulty in completing cleaning of the DPF on site at a client facility and thus increases a need for collecting the vehicle from the client facility to a sales outlet or the like. As a result, time required for the cleaning operation of the DPF is extended, which deteriorates an operation efficiency of the vehicle such as the industrial vehicle.

In addition, a mica gasket disposed in a ring-shaped gasket groove formed in one of the flanges is likely to stick into the gasket groove when an adhesive of the mica gasket evaporates owing to the repetitive regeneration of the DPF. To remove the stuck mica gasket from the gasket groove, the mica gasket is likely to be scraped off, which produces a lot of mica powders.

The present disclosure has been made in view of the above circumstances and is directed to providing a piping with a fixing structure, wherein a clamping coupler including a plurality of clamping pieces each having a groove of a substantially U- or V-shaped cross section is easily detachable from outer peripheries of flanges formed on the piping.

### Solution to Problem

To solve the above problem, a first aspect of the present disclosure is a piping with a fixing structure that includes: an upstream cylindrical body disposed in an exhaust gas passage of an engine mounted on a vehicle body; a downstream cylindrical body disposed downstream of the upstream cylindrical body; an annular upstream flange having a flat connecting surface provided over an entire circumference of an end of the upstream cylindrical body adjacent to the downstream cylindrical body; an annular downstream flange having a flat connecting surface provided over an entire circumference of an end of the downstream cylindrical body adjacent to the upstream cylindrical body; a clamping coupler including a plurality of clamping pieces having respective grooves with a U-shaped or V-shaped cross section, the plurality of clamping pieces being formed in an annular shape with the grooves facing inward, the clamping coupler attachably and detachably connecting the upstream flange and the downstream flange interposed inside the grooves with the connecting surface of the upstream flange abutting against the connecting surface of the downstream flange; and a rib-shaped protrusion provided on an outer peripheral surface of at least one of the upstream cylindrical body and the downstream cylindrical body, the protrusion protruding to a predetermined height in parallel with a side edge of a respective one of the plurality of clamping pieces so as to form a predetermined clearance between the side edge of the respective clamping piece and the protrusion outside the side edge of the respective clamping piece.

A second aspect of the present disclosure is the piping according to the first aspect, wherein the clamping coupler includes a fastener that fastens ends of a pair of the clamping pieces facing to each other, with a bolt, and the protrusion protrudes to the predetermined height with respect to the side edge of each of the facing ends of the pair of the clamping pieces that are fastened to each other with the bolt.

A third aspect of the present disclosure is the piping according to the second aspect, wherein the protrusion protrudes continuously in a range of a predetermined central angle in a circumferential direction of the respective one of the upstream cylindrical body and the downstream cylindrical body so as to protrude to the predetermined height on both sides of the fastener in the circumferential direction.

A fourth aspect of the present disclosure is the piping according to any of the first to third aspects, wherein the plurality of the clamping pieces each includes a brim outwardly bent from at least the side edge of the clamping piece that faces the protrusion.

A fifth aspect of the present disclosure is a piping with a fixing structure that includes: an upstream cylindrical body disposed in an exhaust gas passage of an engine mounted on a vehicle body; a downstream cylindrical body disposed downstream of the upstream cylindrical body; an annular upstream flange having a flat connecting surface provided over an entire circumference of an end of the upstream cylindrical body adjacent to the downstream cylindrical body; an annular downstream flange having a flat connecting surface provided over an entire circumference of an end of the downstream cylindrical body adjacent to the upstream cylindrical body; a purification cylindrical body disposed inside a counterweight on a rear side of the vehicle body and accommodating a purification member that purifies an exhaust gas flowing through the purification member; an opening formed at a predetermined position of the counterweight to penetrate through the counterweight; a pair of clamping couplers each including a plurality of clamping pieces having respective grooves with a U-shaped or V-shaped cross section, the plurality of clamping pieces of each clamping coupler being formed in an annular shape with the grooves facing inward; and rib-shaped protrusions, each of the protrusions provided on an outer peripheral surface of the purification cylindrical body, each protrusion protruding to a predetermined height in parallel with a side edge of a respective one of the plurality of clamping pieces of each clamping coupler so as to form a predetermined clearance between the side edge of the respective clamping piece of each clamping coupler and the protrusion outside the side edge of the respective clamping piece of each clamping coupler. The purification cylindrical body is interposed between the upstream cylindrical body and the downstream cylindrical body and includes a pair of annular flanges each having a flat connecting surface provided over an entire circumference of each of axial ends of the purification cylindrical body. A pair of an upstream side flange of the purification cylindrical body and the upstream flange and a pair of a downstream side flange of the purification cylindrical body and the downstream flange are interposed inside the grooves of the pair of clamping couplers, respectively, and attachably and detachably connected by the pair of clamping couplers. The opening has a size that allows, through the opening, the pair of clamping couplers to be attached and detached, and the purification cylindrical body to pass.

The purification member includes a diesel particulate filter (DPF) or the like.

A sixth aspect of the present disclosure is the piping according to the fifth aspect, wherein the pair of clamping couplers each includes a fastener that fastens ends of a pair of the clamping pieces facing to each other, with a bolt. Each protrusion protrudes to the predetermined height with respect to the side edge of each of the facing ends of the pair of clamping couplers that are fastened to each other with the bolt.

A seventh aspect of the present disclosure is the piping according to the sixth aspect, wherein each protrusion protrudes continuously in a range of a predetermined central angle in a circumferential direction of the purification cylindrical body so as to protrude to the predetermined height on both sides of the fastener in the circumferential direction.

An eighth aspect of the present disclosure is the piping according to any of the fifth to seventh aspects, wherein the plurality of the clamping pieces of each clamping coupler each includes a brim outwardly bent from at least the side edge of the clamping piece that faces the corresponding protrusion.

A ninth aspect of the present disclosure is the piping according to any of fifth to eighth aspects that includes: a first support fixed to the vehicle body to support the upstream cylindrical body; and a second support having one end fixed to a mount base bolted to the vehicle body with a fixing bolt, and the other end fixed to the downstream cylindrical body to support the downstream cylindrical body. The mount base, the second support, and the downstream cylindrical body are integrally slidable in an axial direction of the purification cylindrical body by loosening the fixing bolt through the opening.

A tenth aspect of the present disclosure is the piping according to any of fifth to ninth aspects, wherein the connecting surface of the upstream side flange and the connecting surface of the downstream side flange of the purification cylindrical body each includes: a gasket insertion groove having a ring shape in a front view, being recessed to a predetermined depth in an axially inward direction of the purification cylindrical body, and provided over an entire circumference of the purification cylindrical body, through which a gasket is inserted; and a recessed portion disposed at a predetermined position of the gasket insertion groove in a circumferential direction of the gasket insertion groove, having a predetermined width in the circumferential direction of the gasket insertion groove, and cut out from a radially outer circumferential edge of the gasket insertion groove to an inside of the gasket insertion groove. The gasket includes a mica gasket.

An eleventh aspect of the present disclosure is the piping according to the tenth aspect, wherein the gasket insertion groove is recessed axially inner than an end edge of the recessed portion on an axially inner side of the gasket insertion groove.

A twelfth aspect of the present disclosure of the piping according to the tenth or eleventh aspect, wherein the recessed portion is formed so that a radially outer side surface of the recessed portion is inclined in the axial inward direction and in a radially inward direction of the purification cylindrical body.

A thirteenth aspect of the present disclosure is the piping according to any of the tenth to the twelfth aspects, wherein the recessed portion is provided at a plurality of positions in the circumference of the gasket insertion groove.

A fourteenth aspect of the present disclosure is a piping with a fixing structure that includes: an upstream cylindrical body disposed in an exhaust gas passage of an engine mounted on a vehicle body; a downstream cylindrical body disposed downstream of the upstream cylindrical body; an annular upstream flange having a flat connecting surface provided over an entire circumference of an end of the upstream cylindrical body adjacent to the downstream cylindrical body, an annular downstream flange having a flat connecting surface provided over an entire circumference of an end of the downstream cylindrical body adjacent to the upstream cylindrical body; a clamping coupler including a plurality of clamping pieces having respective grooves with a U-shaped or V-shaped cross section, the plurality of clamping pieces being formed in an annular shape with the grooves facing inward, the clamping coupler attachably and detachably connecting the upstream flange and the downstream flange interposed inside the grooves with the connecting surface of the upstream flange abutting against the connecting surface of the downstream flange. The connecting surface of the upstream flange or the connecting surface of the downstream flange includes: a gasket insertion groove being recessed to a predetermined depth in an axially inward direction of at least one of the upstream cylindrical body and the downstream cylindrical body, and provided over an entire circumference of the connecting surface of the respective one of the upstream cylindrical body and the downstream cylindrical body, through which a gasket is inserted; and a recessed portion disposed at a predetermined position of the gasket insertion groove in a circumferential direction of the gasket insertion groove, having a predetermined width in the circumferential direction of the gasket insertion groove, and cut out from a radially outer circumferential edge of the gasket insertion groove to an inside of the gasket insertion groove. The gasket includes a mica gasket.

### Advantageous Effects of Invention

According to the first aspect, when the upstream flange and the downstream flange are stuck into the grooves of the clamping pieces, which have the U-shaped or V-shaped cross sections, of the clamping coupler, an operator is allowed to insert a jig having a tip of a thin plate shape such as a flathead screwdriver into a clearance between the protrusion and the part of the side edges of the plurality of clamping pieces adjacent to the protrusion. Then, the operator pivots the tip of the jig as a lever around the protrusion by applying the principle of leverage and lifts the part of the side edges of the plurality of clamping pieces adjacent to the protrusion to separate the grooves of the clamping pieces from outer peripheries of the upstream flange and the downstream flange so as to easily detach the clamping coupler.

According to the second aspect, the protrusion protrudes to the predetermined height with respect to the side edge of each of the facing ends of the pair of the clamping pieces that are fastened to each other with the bolt. This allows an operator, after the bolt of the fastener is removed, to insert the jig having the tip of a thin plate shape such as a flathead screwdriver into the clearance between the protrusion and the part of the side edges of the ends of the plurality of clamping pieces adjacent to the fastener.

Then, the operator pivots the tip of the jig as a lever around the protrusion by applying the principle of leverage and lifts the part of the side edges of the ends of the plurality of clamping pieces adjacent to the protrusion so as to separate the ends of the plurality of clamping pieces adjacent to the fastener from outer peripheries of the upstream flange and the downstream flange. Then, the operator inserts the jig such as a flathead screwdriver into the clearance between the outer peripheries of the upstream flange and the downstream flange and insides of the associated grooves of the clamping pieces so as to lift and separate the clamping pieces from the outer peripheries of the upstream flange and downstream flange, which allows the clamping coupler to be easily detached.

According to the third aspect, the protrusion protrudes continuously in a range of a predetermined central angle in a circumferential direction of the respective one of the upstream cylindrical body and the downstream cylindrical body so as to protrude to the predetermined height on both sides of the fastener in the circumferential direction. This allows an operator, after the bolt of the fastener is removed, to insert the jig having the tip of a thin plate shape such as a flathead screwdriver into the clearance between the protrusion and the part of the side edge of each of the ends of the plurality of clamping pieces adjacent to the fastener, even when the fastener of the clamping coupler is attached at a slightly displaced position in a circumferential direction. Then, the operator pivots the tip of the jig as a lever around the protrusion by applying the principle of leverage and lifts the part of the side edges of the ends of the plurality of clamping pieces adjacent to the protrusion so as to separate the ends of the plurality of clamping pieces adjacent to the fastener from outer peripheries of the upstream flange and the downstream flange.

According to the fourth aspect, the plurality of the clamping pieces each includes the brim outwardly bent from at least the side edge of the clamping piece that faces the protrusion. Then, an operator inserts the jig having the tip of a thin plate shape such as a flathead screwdriver into a clearance between the protrusion and the brim at the one of the side edges of the clamping pieces adjacent to the protrusion, and pivots the tip of the jig as a lever around the protrusion by applying the principle of leverage and lifts the brim so as to separate the clamping pieces from the outer peripheries of the upstream flange and the downstream flange.

According to the fifth aspect, through the opening formed at the predetermined position of the counterweight on the rear side of the vehicle body to penetrate through the counterweight, the pair of the upstream side flange of the purification cylindrical body and the upstream flange of the upstream cylindrical body and the pair of the downstream side flange of the purification cylindrical body and the downstream flange of the downstream cylindrical body are interposed inside the grooves of the pair of clamping couplers, respectively, and attachably and detachably connected by the pair of clamping couplers.

When the upstream side flange of the purification cylindrical body and the upstream flange of the upstream cylindrical body, or the downstream side flange of the purification cylindrical body and the downstream flange of the downstream cylindrical body, are stuck into the grooves of the clamping pieces, which have the U-shaped or V-shaped cross sections, of the clamping coupler, an operator is allowed to insert a jig having a tip of a thin plate shape such as a flathead screwdriver into a clearance between an associated one of the side edges of the stuck clamping pieces and the one of the protrusions adjacent to the associated one of the side edges. Then, the operator pivots the tip of the jig as a lever around the one of the protrusions adjacent to the associated one of the side edges by applying the principle of leverage and lifts the associated one of the side edges of the stuck clamping pieces outwardly in the radial direction so as to separate the stuck clamping pieces from the outer peripheries of the upstream side flange of the purification cylindrical body and the upstream flange of the upstream cylindrical body or from the outer peripheries of the downstream side flange of the purification cylindrical body and the downstream flange of the downstream cylindrical body, which allows the stuck clamping coupler to be easily detached.

According to the sixth aspect, each of the protrusions protrudes to the predetermined height with respect to the side edge of each of the facing ends of the pair of clamping couplers that are fastened to each other with the bolt. This allows an operator, after the bolt of the fastener is removed, to insert the jig having the tip of a thin plate shape such as a flathead screwdriver into the clearance between the protrusion and the part of the side edges of the ends of the plurality of clamping pieces adjacent to the fastener.

Then, the operator pivots the tip of the jig as a lever around the protrusion by applying the principle of leverage and lifts the part of the side edges of the ends of the plurality of clamping pieces adjacent to the fastener so as to separate the part of the side edges of the ends of the plurality of clamping pieces adjacent to the fastener from outer peripheries of the upstream flange and the downstream flange. Then, the operator inserts the jig such as a flathead screwdriver into the clearance between the outer peripheries of the upstream flange and the downstream flange and insides of the associated grooves of the clamping pieces so as to lift and separate the clamping pieces from the outer peripheries of the upstream flange and downstream flange, which allows the clamping coupler to be easily detached.

According to the seventh aspect, each of the protrusions protrudes continuously in a range of a predetermined central angle in a circumferential direction of the purification cylindrical body so as to protrude to the predetermined height on both sides of the fastener in the circumferential direction. This allows an operator, after the bolt of the fastener is removed, to insert the jig having the tip of a thin plate shape such as a flathead screwdriver into the clearance between the protrusion and the part of the side edges of the ends of the plurality of clamping pieces adjacent to the fastener, even when the fastener of the clamping coupler is attached at a slightly displaced position in a circumferential direction. Then, the operator pivots the tip of the jig as a lever around the protrusion by applying the principle of leverage and lifts the part of the side edges of the ends of the plurality of clamping pieces so as to separate the part of the side edges of the ends of the plurality of clamping pieces adjacent to the fastener from outer peripheries of the upstream flange and the downstream flange.

According to the eighth aspect, the plurality of the clamping pieces of each clamping coupler each includes the brim outwardly bent from at least the side edge of the clamping piece that faces the corresponding protrusion. Then, an operator inserts the jig having the tip of a thin plate shape such as a flathead screwdriver into a clearance between the protrusion and the brim at the side edge of the clamping piece that faces the protrusion, and pivots the tip of the jig as a lever around the protrusion by applying the principle of leverage and lifts the brim so as to separate the clamping pieces from the outer peripheries of the upstream flange and the downstream flange.

According to the ninth aspect, the mount base and the downstream cylindrical body are moved in the axially outward direction of the purification cylindrical body by loosening the fixing bolt that bolts the mount base to the vehicle body after the pair of the clamping couplers is detached through the opening, which allows an operator to dismount only the purification cylindrical body to take out of the counterweight through the opening. Then, after cleaning the purification member, the operator is allowed to insert the purification cylindrical body through the opening and interpose the purification cylindrical body coaxially between the upstream cylindrical body and the downstream cylindrical body inside the counterweight. The purification member includes a diesel particulate filter (DPF) or the like.

Through the opening, the operator slides the downstream cylindrical body toward the purification cylindrical body to connect the purification cylindrical body coaxially in series with the upstream cylindrical body and the downstream cylindrical body, and brings one of the pair of the clamping couplers to clamp the flanges of the upstream cylindrical body and the purification cylindrical body and the other of the pair of the clamping couplers to clamp the flanges of the downstream cylindrical body and the purification cylindrical body. Then, the operator bolts the mount base to an exhaust gas purification apparatus, which completes the cleaning operation of the exhaust gas purification apparatus. This allows the operator to clean the exhaust gas purification apparatus on site at a client facility without requiring equipment such as a crane, which shortens time required for the cleaning operation of the exhaust gas purification apparatus and improves an operation efficiency of an industrial vehicle.

According to the tenth aspect, even when an adhesive of the mica gasket evaporates owing to heat of the exhaust gas, causing the mica gasket to stick into the gasket groove, an operator is allowed to insert the jig having the tip of a thin plate shape such as a flathead screwdriver into the recessed portion recessed to have the predetermined width in the circumferential direction of the gasket insertion groove. Then, the operator is allowed to pivot the jig as a lever around the radially outer end of the recessed portion outwardly in the radial direction by applying the principle of leverage and to push out the outer peripheral surface of the mica gasket with the tip of the jig toward the operator to be removed from the gasket insertion groove so as to take the mica gasket out of the gasket insertion groove toward the operator. This reduces an amount of mica powders that may be produced when the mica gasket stuck into the gasket insertion groove is separated and removed from the gasket insertion groove, which also shortens operation time for cleaning or the like.

According to the eleventh aspect, the gasket insertion groove is recessed axially inner than an end edge of the recessed portion on an axially inner side of the gasket insertion groove. Mounting the gasket by inserting the gasket into the inner side of the gasket insertion groove allows the outer peripheral surface and the inner peripheral surface of the gasket to be securely in close contact with the inner peripheral surfaces of the gasket insertion groove on the radially outer side and the radially inner side on the axially inner side, which reduces a likelihood of the exhaust gas leaking from the recessed portion.

According to the twelfth aspect, the recessed portion is formed so that the radially outer side surface of the recessed portion is inclined in the axially inward direction and in the radially inward direction of the purification cylindrical body. This configuration allows an operator to press the tip, having a thin plate shape, of the jig such as a flathead screwdriver along the radially outer surface of the recessed portion so as to be in contact with an outer peripheral surface of the gasket, and then to push the handle of the jig such as a flathead screwdriver toward the inner side of the gasket insertion groove, so that the mica gasket is easily taken out of the gasket insertion groove toward the operator.

According to the thirteenth aspect, the recessed portion is provided at the plurality of positions in the circumferential direction of the gasket insertion groove. This configuration allows an operator to gradually remove the mica gasket stuck into the gasket insertion groove in a direction toward the operator by inserting the tip, having a thin plate shape, of the jig such as a flathead screwdriver into the plurality of recessed portions disposed at the plurality of positions of the gasket insertion groove one by one. This, as a result, further reduces the amount of mica powders that may be produced when the mica gasket stuck into the gasket insertion groove is separated and removed from the gasket insertion groove, which further shortens operation time for cleaning or the like.

According to the fourteenth aspect, an operator is allowed to separate the clamping pieces from the outer peripheries of the upstream flange and the downstream flange to detach the clamping coupler. The operator is allowed to insert the jig having the tip of a thin plate shape such as a flathead screwdriver into the recessed portion cut out to have the predetermined width in the circumferential direction of the gasket insertion groove on the connecting surface of the upstream flange or the downstream flange. Then, the operator is allowed to pivot the jig as a lever around the outer end of the recessed portion by applying the principle of leverage and to push out the outer peripheral surface of the mica gasket with the tip of the jig toward the operator to be separated from the gasket insertion groove so as to take the mica gasket out of the gasket insertion groove toward the operator. This reduces an amount of mica powders that may be produced when the mica gasket stuck into the gasket insertion groove is separated and removed from the gasket insertion groove, which also shortens operation time for cleaning or the like.

### BRIEF DESCRIPTION OF DRAWINGS

FIG. 1 is a side view of a forklift that includes an exhaust gas purification apparatus according to an embodiment of the present disclosure.
FIG. 2 is a side cross-sectional view of a main portion of the exhaust gas purification apparatus, illustrating an arrangement of the exhaust gas purification apparatus inside a counterweight of the forklift.
FIG. 3 is a plan view illustrating an opening of the counterweight, with a lid member detached.
FIG. 4 is a plan view of the exhaust gas purification apparatus, viewed from above a vehicle.
FIG. 5 is a front view of the exhaust gas purification apparatus illustrated in FIG. 4, viewed from a rear side of the vehicle.
FIG. 6 is an enlarged plan view of a main portion of a mount base.
FIG. 7 is an exploded perspective view of the exhaust gas purification apparatus.
FIG. 8 is a partially cutout front view of a purification cylindrical body, viewed from the rear side of the vehicle.
FIG. 9 is a front view of the purification cylindrical body, viewed from an upstream side flange.
FIG. 10 is a cross-sectional view of a main portion illustrating a state where a clamping coupler is attached.
FIG. 11 is a view illustrating a detaching operation of a frame body of a stuck clamping coupler on a downstream side.
FIG. 12 is a view illustrating a detaching operation of the frame body of a stuck clamping coupler on an upstream side.
FIG. 13 is a view illustrating a dismounting operation of the purification cylindrical body from an upstream cylindrical body and a downstream cylindrical body.
FIG. 14 is a view illustrating a movement of the mount base illustrated in FIG. 13.
FIG. 15 is a view illustrating a removal operation of a mica gasket that is stuck into a gasket insertion groove.
FIG. 16 is a view illustrating a procedure for mounting the purification cylindrical body to the upstream cylindrical body and the downstream cylindrical body.
FIG. 17 is a view illustrating the movement of the mount base illustrated in FIG. 16.
FIG. 18 is a plan view of the exhaust gas purification apparatus according to a first modification of the embodiment, viewed from above the vehicle.
FIG. 19 is a plan view of the exhaust gas purification apparatus not according to an embodiment of the present invention, viewed from above the vehicle.
FIG. 20 is a front view of the exhaust gas purification apparatus illustrated in FIG. 19, viewed from the rear side of the vehicle.

### DETAILED DESCRIPTION OF EMBODIMENTS

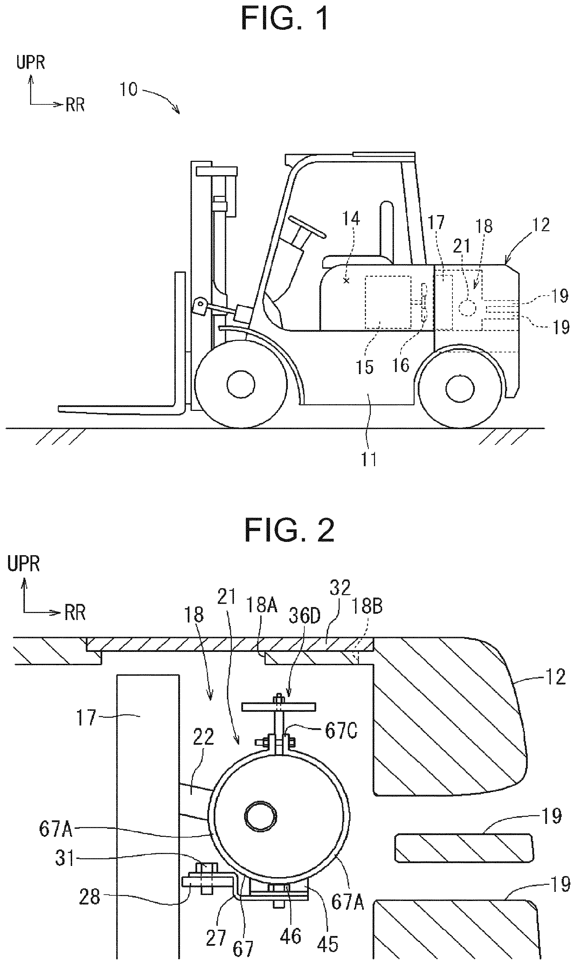

An embodiment of a fixing structure of a piping according to the present disclosure as applied to a forklift will be described in detail in the following paragraphs with reference to the accompanying drawings. Referring to FIGS. 1 to 3, a general configuration of a forklift 10 according to the embodiment will be described. In FIGS. 1 to 3, an arrow RR refers to a rear direction of a vehicle, and an arrow UPR refers to an upper direction of the vehicle. An arrow INR refers to an inward direction in a vehicle width direction.

As illustrated in FIG. 1, a counterweight 12 is disposed on a rear side of a vehicle body 11 of the forklift 10. An engine 15 is mounted in an engine room 14 of the vehicle body 11. The engine 15 is provided by, for example, a diesel engine. An air intake (not illustrated) is provided in a side wall of the engine room 14. A fan 16 is disposed on a rear side of the engine 15. The fan 16 is driven by the engine 15, i.e., the fan 16 is rotated by the engine 15.

A radiator 17 is disposed on a rear side of the fan 16. The radiator 17 cools a coolant of the engine 15. The fan 16 driven by the engine 15 takes in an external air from the air intake into the engine room 14 and blows the air off to the radiator 17. This cools the coolant of the engine 15. The air passing through the radiator 17 passes through a venting chamber 18 having a substantial box shape with a front side opened and disposed on a rear side of the radiator 17, and is blown out of rearward vents 19 penetrating through a rear wall of the counterweight 12 in a front-rear direction of the vehicle. Each of the rearward vents 19 is formed into, for example, a laterally long rectangular-shaped cross section, extending in the vehicle width direction. The two rearward vents 19 are disposed in parallel with each other in an up-down direction, penetrating through the rear wall of the counterweight 12.

In the venting chamber 18 as illustrated in FIG. 2, an exhaust gas purification apparatus 21 is disposed on the rear side of the radiator 17 in the vehicle width direction, and an exhaust pipe 22 is connected to the exhaust gas purification apparatus 21 on an upstream side of the exhaust gas purification apparatus 21. The exhaust pipe 22 forms a part of an exhaust gas passage through which an exhaust gas is discharged. Therefore, the exhaust gas purification apparatus 21 forms the exhaust gas passage together with the exhaust pipe 22, and removes harmful substances contained in the exhaust gas while the exhaust gas passes through the exhaust gas passage from the upstream side to the downstream side.

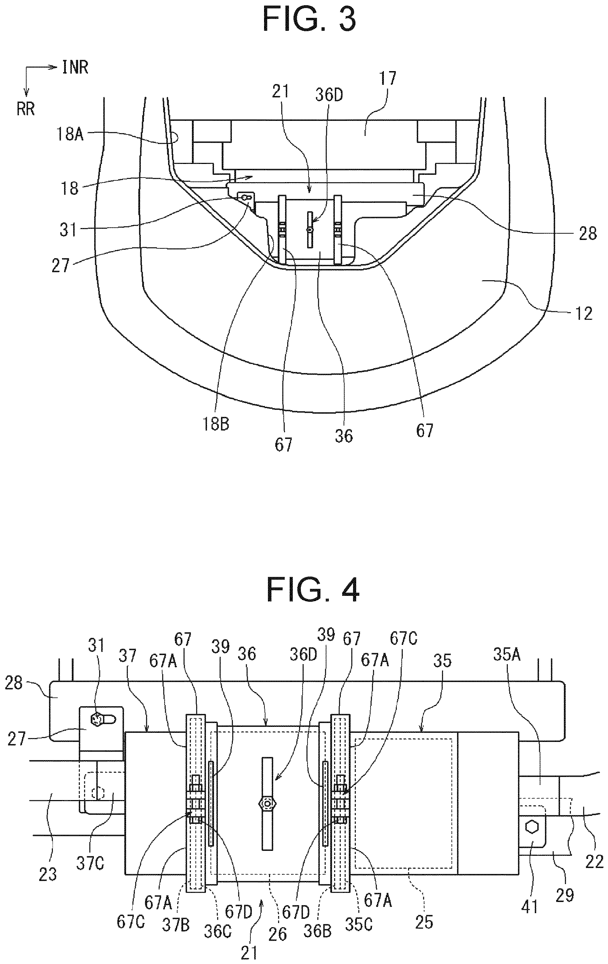

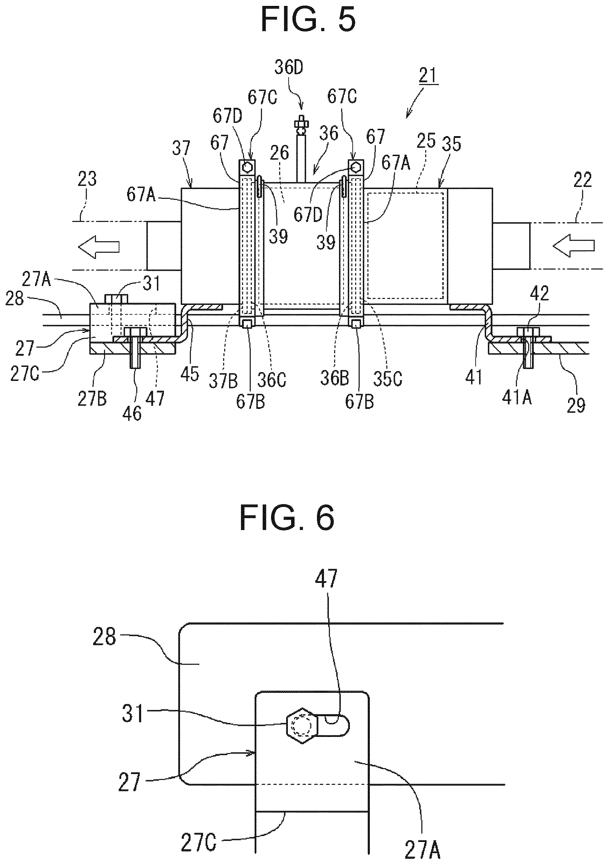

The engine 15 is highly efficient and superior in durability, whereas the engine 15 discharges the harmful substances such as particulate matter (PM), nitrogen oxide (NOx), carbon monoxide (CO), and hydrocarbon (HC), together with the exhaust gas. As described later, the exhaust gas purification apparatus 21 connected to the exhaust pipe 22 includes a diesel oxidation catalyst (DOC) 25 (see FIGS. 4 and 5) disposed on the upstream side of the exhaust gas purification apparatus 21 and a diesel particulate filter 26 (hereinafter referred to as "DPF") (see FIGS. 4 and 5) disposed on the downstream side of the exhaust gas purification apparatus 21. The diesel oxidation catalyst 25 oxides and removes the nitrogen oxide (NOx), the carbon monoxide (CO), the hydrocarbon (HC), and the like. The DPF 26 collects and removes particulate matter (PM).

As illustrated in FIGS. 2 and 3, a lower end of the exhaust gas purification apparatus 21 on the downstream side is mounted on a mount base (a mount base portion) 27 that is bent-formed into a crank shape in a side view and arranged along the vehicle front-rear direction. The mount base 27 is bolted with a bolt 31 to a mount 28 having an elongated rectangular plate shape in a plan view and is arranged in the venting chamber 18 in the vehicle width direction. A lower end of the exhaust gas purification apparatus 21 on the upstream side is mounted on a mounting bracket 29 (see FIGS. 4 and 5) that inwardly protrudes from a side wall of the venting chamber 18 in the vehicle width direction.

As illustrated in FIGS. 2 and 3, the venting chamber 18 has an opening 18A that is opened upward and that has a substantially rectangular shape in a plan view, extending in the vehicle width direction. As illustrated in FIG. 3, a cutout window 18B is formed on a side edge of the opening 18A on the rear side of the vehicle. The cutout window 18B includes a cutout that has a U-shape in a plan view and extends from a substantial center in the vehicle width direction toward the rear side of the vehicle. The cutout window 18B including the cutout having the U-shape in a plan view is formed immediately above the purification cylindrical body 36 and a pair of clamping couplers 67 disposed in a substantially axial center of the exhaust gas purification apparatus 21. The U-shaped cutout of the cutout window 18B in a plan view has a width of a size slightly greater than a size of a distance between the pair of the clamping couplers 67 and extends toward the rear side of the vehicle so that an rear end of the cutout faces an end edge of the purification cylindrical body 36 on the rear side of the vehicle.

The opening 18A and the cutout window 18B are closed with a lid member 32 that has a substantially rectangular plate shape in a plan view, extending in the vehicle width direction, and that is fixed with bolts or the like from above. As described later, an operator is allowed to mount and dismount the purification cylindrical body 36 of the exhaust gas purification apparatus 21 through the cutout window 18B with the lid member 32 detached.

A configuration of the exhaust gas purification apparatus 21 will now be described with reference to FIGS. 4 to 10. As illustrated in FIGS. 4 to 7, the exhaust gas purification apparatus 21 includes an upstream cylindrical body 35 disposed on the upstream side of the exhaust gas purification apparatus 21, a downstream cylindrical body 37 disposed on the downstream side of the exhaust gas purification apparatus 21, and a purification cylindrical body 36 that is coaxially interposed between the upstream cylindrical body 35 and the downstream cylindrical body 37 and dismountably connected in series with the upstream cylindrical body 35 and the downstream cylindrical body 37. The upstream cylindrical body 35 accommodates the diesel oxidation catalyst 25, and the purification cylindrical body 36 accommodates the DPF 26.

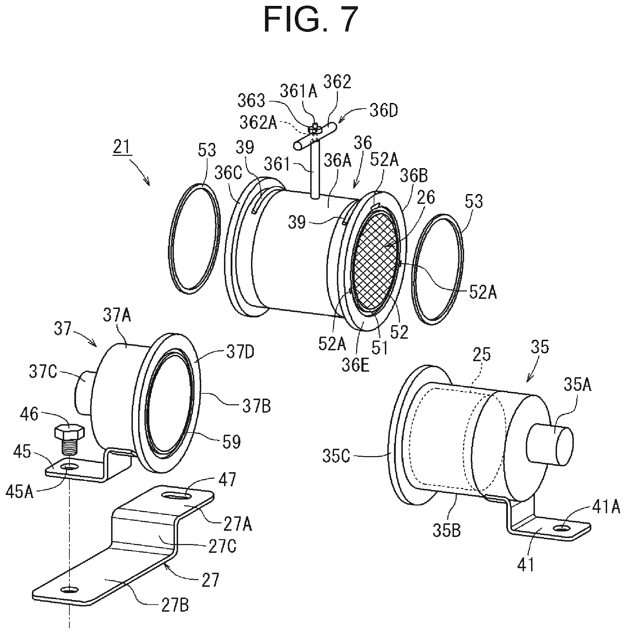

As illustrated in FIG. 7, the upstream cylindrical body 35 includes an inflow cylindrical portion 35A into which the exhaust gas flows, a cylindrical portion 35B, a flange (an upstream flange) 35C, and the diesel oxidation catalyst 25 accommodated in the cylindrical portion 35B. The inflow cylindrical portion 35A has a cylindrical shape having a circular cross section, to which the exhaust pipe 22 is to be connected on an upstream end of the inflow cylindrical portion 35A (see FIGS. 4 and 5). The cylindrical portion 35B has a cylindrical shape. An upstream end of the cylindrical portion 35B is closed, having a through hole of a diameter approximately identical to that of the inflow cylindrical portion 35A in a substantial center of the cylindrical portion 35B. A downstream end of the inflow cylindrical portion 35A is welded to an entire circumference of the through hole on an axially outer side. The diesel oxidation catalyst 25 having a substantially columnar shape is fitted inside the cylindrical portion 35B close to a downstream end of the cylindrical portion 35B.

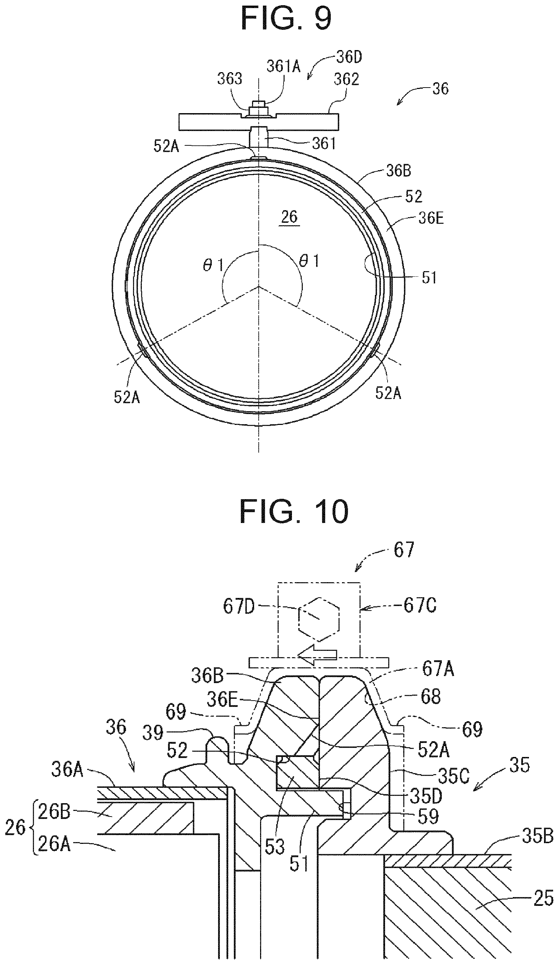

The flange 35C formed into a brim shape is welded to an entire circumference of the downstream end of the cylindrical portion 35B (see FIG. 10). As illustrated in FIG. 10, the flange 35C has a connecting surface 35D of an annular flat surface on a downstream end of the flange 35C, axially orthogonal to the flange 35C. The connecting surface 35D abuts against an upstream side flange 36B of the purification cylindrical body 36 to be connected (see FIGS. 4 and 5).

The diesel oxidation catalyst 25 has a cellular cylindrical body made of ceramic, having an outer diameter appropriately equivalent to an inner diameter of the cylindrical portion 35B. The diesel oxidation catalyst 25 has a lot of through holes in an axial direction thereof, and the inner surfaces of the through holes are coated with precious metal such as platinum (Pt). The diesel oxidation catalyst 25 oxides and removes the nitrogen oxide (NOx), the carbon monoxide (CO), the hydrocarbon (HC), and the like contained in the exhaust gas by flowing the exhaust gas through the through holes at a predetermined temperature.

The upstream cylindrical body 35 configured as described above is, as illustrated in FIGS. 5 and 7, fixed by welding or the like to a plate-like support member (a first support) 41 that is bent-formed into a crank shape in a side view, with an upper end surface of the support member 41 fixed to a lower surface of the cylindrical portion 35B and a lower end portion of the support member 41 disposed below the inflow cylindrical portion 35A. The lower end portion of the support member 41 has a through hole 41A. The support member 41 is mounted on and bolted to an upper surface of the mounting bracket 29 with a bolt 42 inserted through the through hole 41A. In this way, the upstream cylindrical body 35 is fixed, via the support member 41, onto the mounting bracket 29 that is fixed to the vehicle body 11.

As illustrated in FIG. 7, the downstream cylindrical body 37 includes a cylindrical portion 37A into which the exhaust gas passing through the DPF 26 accommodated in the purification cylindrical body 36 flows, a flange (a downstream flange) 37B, and an outflow cylindrical portion 37C from which the exhaust gas flows out. The cylindrical portion 37A has a cylindrical shape, with an outer diameter approximately identical to that of the cylindrical portion 35B of the upstream cylindrical body 35, and a length shorter than, for example, approximately a half of, that of the cylindrical portion 35B in the axial direction. A downstream end of the cylindrical portion 37A is closed, having a through hole of a diameter approximately identical to that of the outflow cylindrical portion 37C in a substantial center of the cylindrical portion 37A. An upstream end of the outflow cylindrical portion 37C is welded to an entire circumference of the through hole on an axially outer side. The outflow cylindrical portion 37C has a cylindrical shape having a circular cross section, to which an exhaust pipe 23 is to be connected on a downstream end of the outflow cylindrical portion 37C (see FIGS. 4 and 5).

The flange 37B formed into a brim shape is welded to an entire circumference of an upstream end of the cylindrical portion 37A. The flange 37B is plane-symmetrical to the flange 35C of the upstream cylindrical body 35. Therefore, the flange 37B has a connecting surface 37D of an annular flat surface on an upstream end of the flange 37B, axially orthogonal to the flange 37B. The connecting surface 37D abuts against a downstream side flange 36C of the purification cylindrical body 36 to be connected (see FIGS. 4 and 5).

The downstream cylindrical body 37 configured as described above is, as illustrated in FIGS. 5 and 7, fixed by welding or the like to a plate-like support member (a second support) 45 that is bent-formed into a crank shape in a side view, with an upper end surface of the support member 45 fixed to a lower surface of the cylindrical portion 37A and a lower end portion of the support member 45 disposed on a downstream side of the cylindrical portion 37A in the axial direction. The lower end portion of the support member 45 has a through hole 45A. The support member 45 is mounted on and bolted to an upper surface of a lower end portion 27B of the mount base 27 with a bolt 46 inserted through the through hole 45A. The mount base 27 has a plate shape that is bent-formed into a crank shape in a side view. The mount base 27 is disposed orthogonal to the axial direction of the downstream cylindrical body 37 and bolted to the lower end portion of the support member 45 orthogonally to a length direction of the support member 45.

The mount base 27 bolted to the lower end portion of the support member 45 has a long hole 47 on an upper end portion 27A of the mount base 27. The long hole 47 extends in the axial direction of the downstream cylindrical body 37. As illustrated in FIGS. 4 to 6, the upper end portion 27A of the mount base 27 is mounted on an upper surface of the mount 28, a wall 27C extending downward at a substantially right angle from an end edge of the upper end portion 27A on a side facing the lower end portion 27B abuts against an end of the mount 28 on the rear side of the vehicle, and the mount base 27 is bolted to the mount 28 with the bolt 31 inserted through the long hole 47.

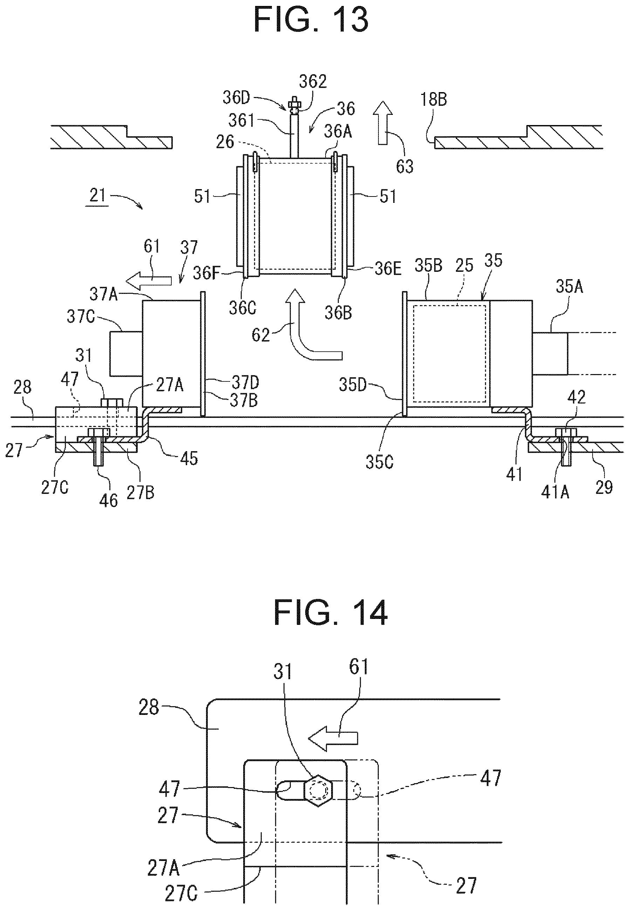

As illustrated in FIGS. 5 and 6, when the purification cylindrical body 36 is mounted to be coaxially interposed between the upstream cylindrical body 35 and the downstream cylindrical body 37, the bolt 31 in the long hole 47 is positioned close to an end of the long hole 47 in a length direction far from the downstream cylindrical body 37. As illustrated in FIGS. 13 and 14, when the purification cylindrical body 36 is dismounted from the position between the upstream cylindrical body 35 and the downstream cylindrical body 37, the bolt 31 in the long hole 47 is slightly loosened to be positioned close to an end of the long hole 47 in the length direction adjacent to the downstream cylindrical body 37.

Therefore, the downstream cylindrical body 37 is movably fixed in the axial direction of the downstream cylindrical body 37 within a length of the long hole 47, via the support member 45 and the mount base 27 bolted to the mount 28. The end of the mount 28 on the rear side of the vehicle is disposed in the axial direction of the exhaust gas purification apparatus 21, that is, in the vehicle width direction. The downstream cylindrical body 37 is easily movable in the axial direction of the downstream cylindrical body 37 by slightly loosening the bolt 31 and sliding the downstream cylindrical body 37 in a state where the wall 27C of the mount base 27 abuts against the end of the mount 28 on the rear side of the vehicle.

As illustrated in FIGS. 7 to 10, the purification cylindrical body 36 includes a cylindrical portion 36A into which the exhaust gas passing through the diesel oxidation catalyst 25 accommodated in the upstream cylindrical body 35 flows, the upstream side flange 36B, the downstream side flange 36C, a holding portion 36D, and the DPF 26 accommodated in the cylindrical portion 36A. The cylindrical portion 36A has a cylindrical shape with an outer diameter approximately identical to that of the cylindrical portion 35B of the upstream cylindrical body 35, and includes the DPF 26 having a substantially columnar shape fitted inside the cylindrical portion 36A and inserted over an approximately entire length of the cylindrical portion 36A.

The upstream side flange 36B formed into a brim shape is welded to an entire circumference of an upstream end of the cylindrical portion 36A. The downstream side flange 36C formed into a brim shape is welded to an entire circumference of a downstream end of the cylindrical portion 36A. The upstream side flange 36B and the downstream side flange 36C have an identical configuration. The upstream side flange 36B has a connecting surface 36E of an annular flat surface on an upstream end of the flange 36B, axially orthogonal to the flange 36B. The connecting surface 36E abuts against the connecting surface 35D of the flange 35C of the upstream cylindrical body 35 to be connected as described later (see FIG. 10).

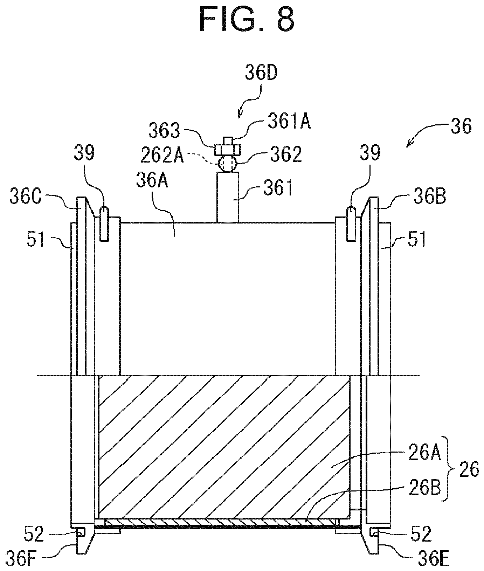

The downstream side flange 36C has a connecting surface 36F (see FIG. 8) of an annular flat surface on a downstream end of the flange 36C, axially orthogonal to the flange 36C. The connecting surface 36F abuts against the connecting surface 37D of the flange 37B of the downstream cylindrical body 37 to be connected. The holding portion 36D having a T-shape in an axial view disposed at an axial center of an outer peripheral surface of the cylindrical portion 36A protrudes vertically upward from the outer peripheral surface of the cylindrical portion 36A. The holding portion 36D includes a protruding stem 361, a holding stem 362, and a nut 363. The protruding stem 361 outwardly protrudes in a radial direction from the axial center of the outer peripheral surface of the cylindrical portion 36A. The holding stem 362 has a through hole 362A at a center of the holding stem 362 in a length direction, and a screw portion 361A formed at a tip end of the protruding stem 361 is inserted through the through hole 362A. The nut 363 is screwed down on the screw portion 361A. A base end of the protruding stem 361 is screwed into the outer peripheral surface of the cylindrical portion 36A and fixed by laser weld or the like. The configuration described above allows an operator to hold the holding stem 362 of the holding portion 36D to carry the purification cylindrical body 36.

As illustrated in FIGS. 4, 7, and 8, a pair of protrusions 39 each having a rib shape are provided to the outer peripheral surface of the cylindrical portion 36A, one at a position close to and on an axially inner side of the upstream side flange 36B of the cylindrical portion 36A and the other at a position close to and on an axially inner side of the downstream side flange 36C of the cylindrical portion 36A. The protrusions 39 protrude to a predetermined height, extending in parallel with each other along a circumference of the cylindrical portion 36A by facing to each other with the protruding stem 361 of the holding portion 36D interposed therebetween. Each of the rib-shaped protrusions 39 protrudes continuously in an arc of a predetermined central angle (for example, a central angle of approximately 60 degrees) in the circumferential direction around an axis of the cylindrical portion 36A. Centers of the rib-shaped protrusions 39 in the circumferential directions thereof and the protruding stem 361 of the holding portion 36D are aligned in line in parallel with the axis of the cylindrical portion 36A.

As illustrated in FIGS. 8 and 10, the DPF 26 includes, for example, a filter main body 26A made of a porous member such as a ceramic and formed into a columnar shape, and a heat insulator 26B having a cylindrical shape and provided over an entire circumference of the filter main body 26A. The heat insulator 26B serves as a cushioning member. The filter main body 26A has a cellular cylindrical body having a honeycomb structure provided with a lot of pores in the axial direction. One of two ends of each of the pores in the axial direction is closed with a sealing member, and closed sides and opened sides of the pores are alternately arranged between any two pores adjacent to each other. The filter main body 26A collects the particulate matter (PM) while the exhaust gas flowing from the upstream side into the pores of the filter main body 26A passes through the porous member, and thus allows the exhaust gas alone to flow through adjacent pores out to the downstream side.

In this case, the temperature of the exhaust gas is periodically increased so as to burn the particulate matter collected by the filter main body 26A to be removed. However, part of the particulate matter is gradually deposited in the pores as ash. In addition, other remaining unburned materials such as heavy metal and calcium in an engine oil are also gradually deposited in the pores. For this reason, the purification cylindrical body 36 is dismountable for cleaning the DPF 26, as described later (see FIG. 13).

As illustrated in FIGS. 7 to 10, the connecting surface 36E of the upstream side flange 36B and the connecting surface 36F of the downstream side flange 36C have insertion ribs 51, respectively. The insertion ribs 51 each have a ring shape in a front view, having a predetermined thickness in the radial direction. The insertion ribs 51 protrude in the axially outward direction from respective radially inner circumferential edge portions of the connecting surface 36E and the connecting surface 36F to approximately a constant height, provided over an entire circumference of the respective connecting surfaces coaxially with the cylindrical portion 36A.

The connecting surface 36E and the connecting surface 36F have gasket insertion grooves 52, respectively. Each of the gasket insertion grooves 52 having a U-shaped cross section in the radial direction is recessed in the axially inward direction and provided over an entire circumference of a base end portion of the insertion rib 51 on a radially outer side. Mica gaskets 53 each having a ring shape and a substantially rectangular cross section pass over the respective insertion ribs 51 to be inserted into the respective gasket insertion grooves 52 (see FIG. 10).

Each of the gasket insertion grooves 52 of the connecting surface 36E and the connecting surface 36F has recessed portions 52A extending from an radially outer circumferential edge of the gasket insertion groove 52 to the inside of the gasket insertion groove 52 and having a predetermined width (for example, approximately 15 mm that is slightly wider than a width of a tip of a flathead screwdriver) in the circumferential direction of the gasket insertion groove 52. The recessed portions 52A of each of the gasket insertion grooves 52 are disposed at predetermined positions in the circumferential direction of the gasket insertion groove 52. For example, one of the recessed portions 52A may be disposed at an upper end of the gasket insertion groove 52 viewed in the axial direction, facing to the protruding stem 361 of the holding portion 36D, and two of the recessed portions 52A may be disposed at positions away from the upper end of the gasket insertion groove 52, one in a clockwise direction and the other in a counterclockwise direction, by central angles of θ1 degree (for example, approximately 120 degrees). FIGS. 7 and 9 illustrate the recessed portions 52A formed at three positions of the gasket insertion groove 52 of the connecting surface 36E in the circumferential direction. In the same manner, the recessed portions 52A are formed at three positions of the gasket insertion groove 52 of the connecting surface 36F in the circumferential direction.

Each of the recessed portions 52A is formed so that a radially outer side surface of the recessed portion 52A with respect to the axis of the cylindrical portion 36A is inclined in the axially inward direction and in the radially inward direction. The gasket insertion groove 52 is formed to be recessed to a predetermined depth inner than end edges of the recessed portions 52A thereof on axially inner sides with respect to the axis of the cylindrical portion 36A (for example, to a depth approximately half of a thickness of the mica gasket 53).

As illustrated in FIGS. 7 and 10, the connecting surface 35D of the flange 35C of the upstream cylindrical body 35 and the connecting surface 37D of the flange 37B of the downstream cylindrical body 37 each have an insertion groove 59 that has a circular shape in a front view and a substantially U-shaped cross section and provided over an entire circumference of the respective connecting surface at a position at which the insertion groove 59 face the associated insertion rib 51 so that the associated insertion rib 51 is inserted into the insertion groove 59 when the purification cylindrical body 36 is coaxially interposed between the upstream cylindrical body 35 and the downstream cylindrical body 37. The insertion grooves 59 are formed to have depths approximately equivalent to sizes of heights of the associated insertion ribs 51 protruded from the connecting surface 36E of the upstream side flange 36B of the purification cylindrical body 36 and the connecting surface 36F of the downstream side flange 36C of the purification cylindrical body 36. A width of each of the insertion grooves 59 in the radial direction is approximately equivalent to a size of a thickness of the associated insertion rib 51 in the radial direction.

A height of the insertion rib 51 protruded from the connecting surface 36E may be different from a height of the insertion rib 51 protruded from the connecting surface 36F. For example, one of the heights of the insertion ribs 51 protruded from the connecting surface 36E may be approximately 3 mm, and the other of the heights of the insertion ribs 51 protruded from the connecting surface 36E may be approximately 6 mm. Accordingly, one of the depths of the insertion grooves 59 associated to the one of the insertion ribs 51 may be approximately 3 mm and the other of the depths of the insertion grooves 59 associated to the other of the insertion ribs 51 may be approximately 6 mm. In this case, the purification cylindrical body 36 is mountable only in a certain axial direction to be coaxially interposed between the upstream cylindrical body 35 and the downstream cylindrical body 37 so as to meet a direction in which the exhaust gas flows through the DPF 26.

The clamping coupler 67 will now be described with reference to FIGS. 2, 4, 5, and 10 to 12. As illustrated in FIGS. 2, 4, 5, and 10, each of the pair of the clamping couplers 67 includes a pair of frame bodies 67A (each corresponding to a clamping piece) each having a semi-arc shape and having a groove 68 of a substantially U- or V-shaped cross section (FIGS. 10 to 12 illustrate an example of the substantially U-shaped cross section), a hinge 67B pivotably coupling first ends of the pair of the frame bodies 67A, and a fastener 67C connecting second ends of the pair of the frame bodies 67A to each other by using a bolt and a nut.

One of the pair of the clamping couplers 67 secures the upstream side flange 36B of the purification cylindrical body 36 to the flange 35C of the upstream cylindrical body 35 in the axial direction by tightening a bolt 67D of the fastener 67C. The other of the pair of the clamping couplers 67 secures the downstream side flange 36C of the purification cylindrical body 36 to the flange 37B of the downstream cylindrical body 37 in the axial direction by tightening the bolt 67D of the fastener 67C.

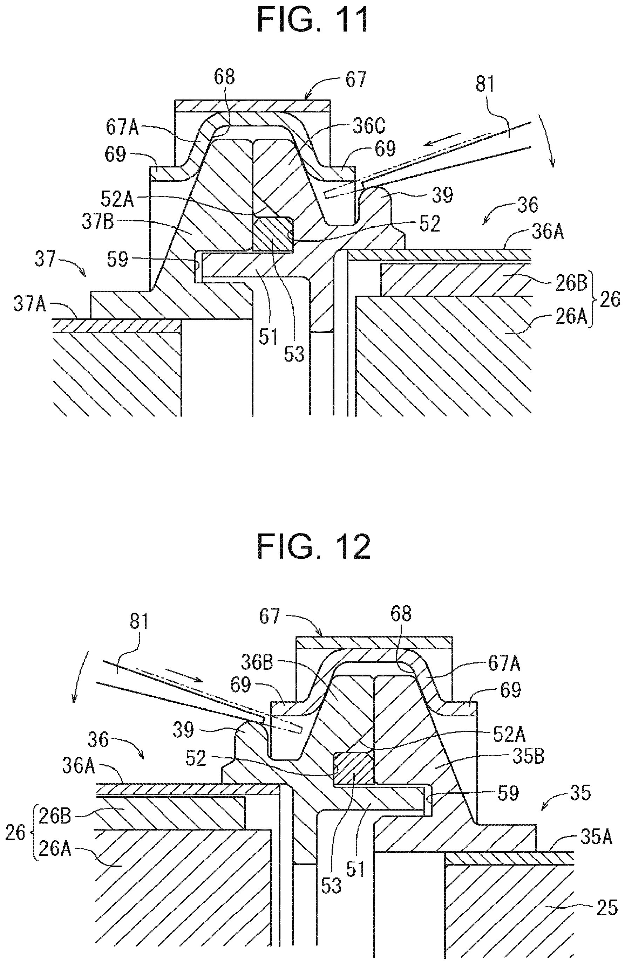

As illustrated in FIGS. 11 and 12, each of the pair of the frame bodies 67A of the clamping coupler 67 includes brims 69 at both side edges of the groove 68 having a substantially U-shaped cross section. The brims 69 each are outwardly bent in the axial direction, provided over the entire length thereof so as to be substantially parallel to the outer peripheral surface of each of the cylindrical portion 35B, the cylindrical portion 36A, and the cylindrical portion 37A. As illustrated in FIGS. 4 and 5, the protrusions 39 are disposed close to and on the axially inner sides of the upstream side flange 36B and the downstream side flange 36C on the outer peripheral surface of the purification cylindrical body 36, extending continuously in a predetermined length and protruding outwardly with respect to the fasteners 67C in the circumferential direction. Each of the protrusions 39 protruding to form a rib shape is disposed at a position where a predetermined clearance (for example, a clearance of approximately 3 to 5 mm) is created from an adjacent one, to the protrusion 39, of the brims 69 that are formed at the side edge of each of the frame bodies 67A.

This configuration allows an operator to insert a jig 81 having a tip of a thin plate shape such as a flathead screwdriver into the clearance between any one of the protrusions 39 and the adjacent one, to the protrusion 39, of the brims 69 that are formed at the side edges of the associated frame bodies 67A on the second ends having the associated fastener 67C that fastens either flange 35C to the flange 36B or the flange 36C to the flange 37B. Then, the operator is allowed to pivot the jig 81 as a lever around the protrusion 39 by applying the principle of leverage and to lift the brim 69 of the frame body 67A outwardly in the radial direction with the tip of the jig 81.

Referring to FIGS. 11 to 15, the following will describe a procedure for dismounting the purification cylindrical body 36 of the exhaust gas purification apparatus 21 having the above configuration from the position between the upstream cylindrical body 35 and the downstream cylindrical body 37 through the cutout window 18B of the opening 18A disposed at an upper portion of the counterweight 12, in order to clean the DPF 26. An operator first detaches the lid member 32 (see FIG. 2) covering the opening 18A disposed at the upper portion of the counterweight 12. Then, the operator, through the cutout window 18B (see FIG. 3), removes the bolt 67D (see FIGS. 3 and 4) of the fastener 67C of each of the clamping couplers 67 from the associated nut and disconnects the second ends of the associated frame bodies 67A so as to detach each of the clamping couplers 67.

If any pair of the flange 35C and the flange 36B and of the flange 36C and the flange 37B is stuck into the associated groove 68 of the associated frame body 67A owing to repetitive regeneration of the DPF in which the particulate matter (PM) is burnt to be removed by increasing a temperature of the DPF 26 to approximately 700 to 800 degree centigrade, the operator inserts the jig 81 such as the flathead screwdriver into the clearance between the associated brim 69 on the side edge of the associated frame body 67A and the associated protrusion 39, as illustrated in FIGS. 11 and 12. Then, the operator pivots the jig 81 as a lever around the protrusion 39 by applying the principle of leverage and lifts the brim 69 of the frame body 67A outwardly in the radial direction with the tip of the jig 81, so as to separate the groove 68 of the associated frame body 67A from the stuck outer peripheries of the associated pair of the flange 35C and the flange 36B or of the flange 36C and the flange 37B to detach the associated clamping coupler 67.

After that, the following operations will be performed by the operator, through the cutout window 18B of the opening 18A. As illustrated in FIGS. 13 and 14, the operator slightly loosens the bolt 31 inserted through the long hole 47 formed in the upper end portion 27A of the mount base 27 so that the downstream cylindrical body 37 becomes movable integrally with the support member 45 and the mount base 27 in the axially downstream direction (a direction toward left in FIG. 13) and a closely contacting force in the axial direction between the connecting surfaces 35D and 36E or between the connecting surfaces 36F and 37D is relieved. Then, the operator holds the holding stem 362 of the holding portion 36D protruding vertically upward from the outer peripheral surface of the cylindrical portion 36A of the purification cylindrical body 36 to move the downstream cylindrical body 37 in a direction away from the purification cylindrical body 36, i.e., in the axially downward direction (a direction indicated by an arrow 61 illustrated in FIG. 14).

As illustrated in FIG. 14, the operator then moves the mount base 27 integrally with the downstream cylindrical body 37 and the support member 45 in the axially downward direction so that the bolt 31 abuts against or is positioned close to the end of the long hole 47, formed on the upper end portion 27A of the mount base 27, in the length direction on the side close to the downstream cylindrical body 37. This operation allows the operator to pull the insertion rib 51 of the downstream side flange 36C of the purification cylindrical body 36 out of the insertion groove 59 (see FIG. 7) of the flange 37B of the downstream cylindrical body 37 to dismount the downstream cylindrical body 37 from the purification cylindrical body 36.

Then, the operator holds the holding stem 362 of the holding portion 36D to move the purification cylindrical body 36 in a substantially lateral direction away from the upstream cylindrical body 35, i.e., in the axially downward direction (a direction indicated by an arrow 62 illustrated in FIG. 13). This operation allows the operator to pull the insertion rib 51 of the upstream side flange 36B of the purification cylindrical body 36 out of the insertion groove 59 (see FIG. 12) of the flange 35C of the upstream cylindrical body 35 to dismount the purification cylindrical body 36 from the upstream cylindrical body 35.

After that the operator holds the holding stem 362 of the holding portion 36D to move the purification cylindrical body 36 vertically upward (a direction indicated by an arrow 63 illustrated in FIG. 13), i.e., the upper direction of the vehicle, to take out the purification cylindrical body 36 through the cutout window 18B (see FIG. 3) of the opening 18A disposed at the upper portion of the counterweight 12. This operation allows the operator to hold the holding stem 362 to take out only the purification cylindrical body 36 upwardly through the cutout window 18B (see FIG. 3) in a state where the upstream cylindrical body 35 is fixed onto the mounting bracket 29 via the support member 41 with the bolt 42 and the downstream cylindrical body 37 is axially movably mounted to the mount 28 via the support member 45 and the mount base 27 with the bolt 31.

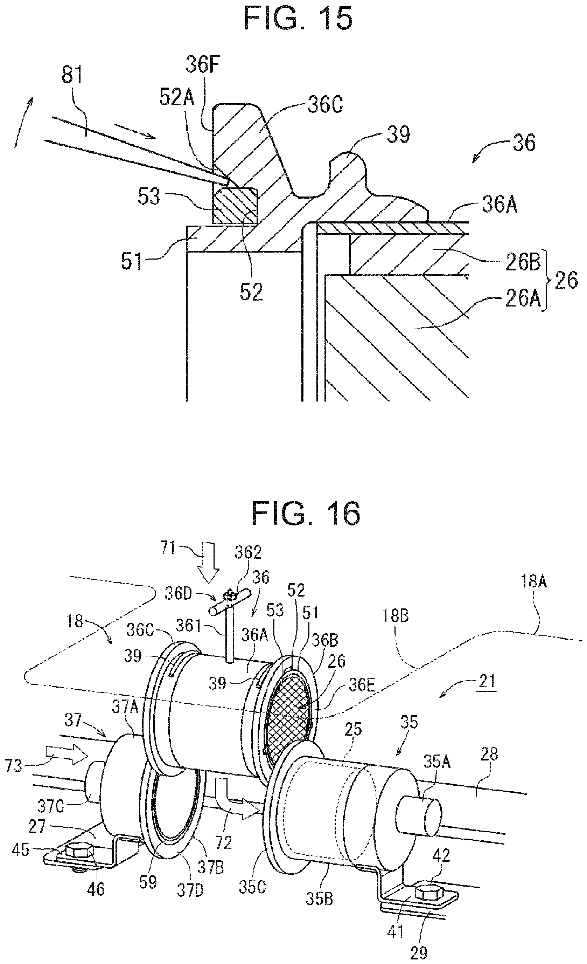

As illustrated in FIG. 15, the operator inserts the jig 81 having a tip of a thin plate shape such as a flathead screwdriver into each of the recessed portions 52A extending from the radially outer circumferential edge of the gasket insertion groove 52, which has a ring shape in a front view, to the inside of the gasket insertion groove 52. The gasket insertion groove 52 in this case is referred to the one formed on the connecting surface 36F of the downstream side flange 36C of the purification cylindrical body 36 that has been taken out. Then, the operator pivots the jig 81 around a radially outer end of the recessed portion 52A outwardly in the radial direction and pushes out an outer peripheral surface of the mica gasket 53 toward the operator (in a direction toward left in FIG. 15) from the gasket insertion groove 52 so as to take the mica gasket 53 out of the gasket insertion groove 52.

Likewise, the operator inserts the jig 81 such as a flathead screwdriver into each of the recessed portions 52A extending from the radially outer circumferential edge of the gasket insertion groove 52 to the inside of the gasket insertion groove 52. The gasket insertion groove 52 in this case is referred to the one formed on the connecting surface 36E of the upstream side flange 36B of the purification cylindrical body 36. Then, the operator pivots the jig 81 around the radially outer end of the recessed portion 52A outwardly in the radial direction and pushes out the outer peripheral surface of the mica gasket 53 toward the operator from the gasket insertion groove 52 so as to take the mica gasket 53 out of the gasket insertion groove 52.

In this way, even when an adhesive of some of the mica gaskets 53 evaporates owing to heat of the exhaust gas to cause the mica gasket 53 to stick into the associated gasket insertion groove 52, the operator is allowed to easily separate and remove the stuck mica gasket 53 from the associated gasket insertion groove 52 toward the operator. This reduces an amount of mica powders that may be produced when the mica gasket 53 stuck into the gasket insertion groove 52 is separated and removed from the gasket insertion groove 52, which also shortens operation time for cleaning or the like.

Then, the ash of the particulate matter and the remaining unburnt matters deposited in the pores are removed by blowing compressed air with, for example, an air gun or the like at the filter main body 26A (see FIG. 10) of the DPF 26 accommodated in the purification cylindrical body 36, so as to clean the DPF 26 to regenerate the collecting capability thereof. After the DPF 26 is cleaned, the purification cylindrical body 36 accommodating the DPF 26 is mounted back to the position between the upstream cylindrical body 35 and the downstream cylindrical body 37 (see FIG. 16).

Referring to FIGS. 4, 5, 10, 16, and 17, the following will describe a procedure for mounting the purification cylindrical body 36 of the exhaust gas purification apparatus 21 having the configuration as described above back to the position between the upstream cylindrical body 35 and the downstream cylindrical body 37, after cleaning the DPF 26. As illustrated in FIG. 16, the operator first passes the ring-shaped mica gasket 53 over the insertion rib 51 of each of the upstream side flange 36B and the downstream side flange 36C of the purification cylindrical body 36, and then inserts the mica gasket 53 into the gasket insertion groove 52. Then, the operator performs the following operation through the cutout window 18B (see FIG. 3) of the opening 18A disposed at the upper portion of the counterweight 12.

The operator holds the holding stem 362 of the holding portion 36D protruding vertically upward from the outer peripheral surface of the cylindrical portion 36A of the purification cylindrical body 36 to insert the purification cylindrical body 36 vertically downward (a direction indicated by an arrow 71 illustrated in FIG. 16) through the cutout window 18B of the opening 18A and interpose the purification cylindrical body 36 between the upstream cylindrical body 35 and the downstream cylindrical body 37. Then, the operator holding the holding stem 362 of the holding portion 36D moves the purification cylindrical body 36 to the side of the upstream cylindrical body 35 (a direction indicated by an arrow 72 illustrated in FIG. 16) to insert the insertion rib 51, which has a ring shape in a front view, of the upstream side flange 36B of the purification cylindrical body 36 into the insertion groove 59 of the flange 35C of the upstream cylindrical body 35 (see FIG. 10). The upstream cylindrical body 35 is fixed onto the mounting bracket 29 via the support member 41 with the bolt 42.

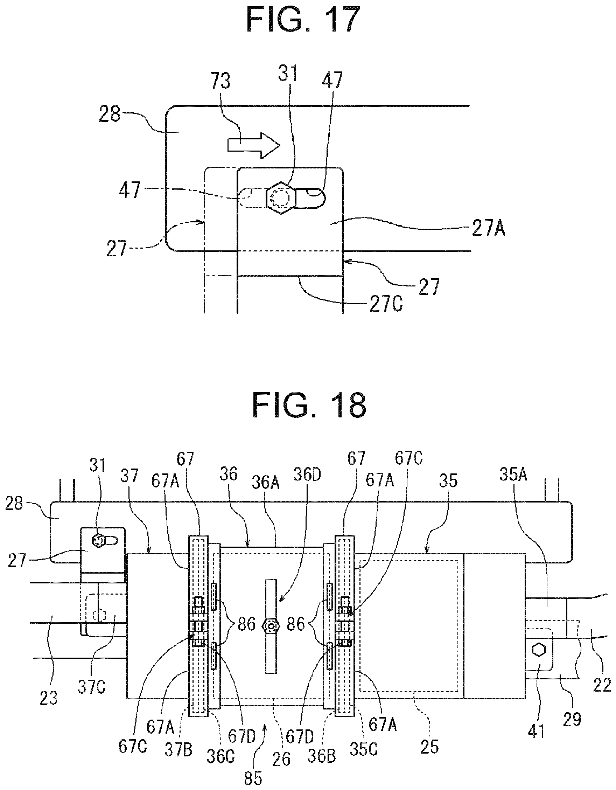

As illustrated in FIGS. 16 and 17, since the bolt 31 inserted through the long hole 47 formed in the upper end portion 27A of the mount base 27 is slightly loosened, the operator holding the holding stem 362 of the holding portion 36D moves the downstream cylindrical body 37 integrally with the mount base 27 and the support member 45 to a side of the purification cylindrical body 36 (a direction indicated by an arrow 73 illustrated in FIG. 16). Then, the operator holding the holding stem 362 of the holding portion 36D inserts the insertion rib 51 (see FIG. 13), which has a ring shape in a front view, of the downstream side flange 36C of the purification cylindrical body 36 into the insertion groove 59 of the flange 37B of the downstream cylindrical body 37, and temporarily tightens the bolt 31.

As illustrated in FIGS. 4, 5, and 10, the operator then attaches the annular clamping coupler 67 to the radially outer peripheries of the upstream side flange 36B of the purification cylindrical body 36 and the flange 35C of the upstream cylindrical body 35. The operator tightens the bolt 67D of the fastener 67C of the clamping coupler 67, and causes the connecting surface 36E of the upstream side flange 36B of the purification cylindrical body 36 to abut against the opposing connecting surface 35D of the flange 35C of the upstream cylindrical body 35 while squashing the mica gasket 53 inserted in the gasket insertion groove 52 of the upstream side flange 36B, to fix the connecting surface 36E and the connecting surface 35D.

Then, the operator attaches the annular clamping coupler 67 to the radially outer peripheries of the downstream side flange 36C of the purification cylindrical body 36 and the flange 37B of the downstream cylindrical body 37. The operator slightly loosens the bolt 31 inserted through the long hole 47 formed in the upper end portion 27A of the mount base 27, tightens the bolt 67D of the fastener 67C of the clamping coupler 67, and causes the connecting surface 36F (see FIG. 13) of the downstream side flange 36C of the purification cylindrical body 36 to abut against the opposing connecting surface 37D of the flange 37B of the downstream cylindrical body 37 while squashing the mica gasket 53 inserted in the gasket insertion groove 52 of the downstream side flange 36C, to fix the connecting surface 36F and the connecting surface 37D.

After that, the operator tightens the bolt 31 inserted through the long hole 47 in the mount base 27 to fix the downstream cylindrical body 37 onto the mount 28 via the support member 45 and the mount base 27. In this state, as illustrated in FIG. 17, the bolt 31 in the long hole 47 abuts against or is positioned close to the end of the long hole 47 in the length direction on the side far from the downstream cylindrical body 37, so as to be tightened.

In this way, as illustrated in FIGS. 4 and 5, the exhaust gas purification apparatus 21 is fixed to the inside of the venting chamber 18 of the vehicle body 11 (see FIG. 1) in a state where the purification cylindrical body 36 is coaxially interposed between the upstream cylindrical body 35 and the downstream cylindrical body 37 and thus the upstream cylindrical body 35, the purification cylindrical body 36, and the downstream cylindrical body 37 are aligned in the axial direction. Then, the operator covers the opening 18A and the cutout window 18B with the lid member 32 and bolts the lid member 32 to fix so that the cleaning operation of the DPF 26 is finished (see FIG. 2).

According to the embodiment of the exhaust gas purification apparatus 21 of the present disclosure as described above in detail, the pair of rib-shaped protrusions 39 is protruded from the outer peripheral surface of the purification cylindrical body 36, one at the position close to the upstream side flange 36B and the other at the position close to the downstream side flange 36C, extending in the circumferential direction of the purification cylindrical body 36. Each of the protrusions 39 extends in a predetermined length, protruding outwardly with respect to the fastener 67C of the associated clamping coupler 67 in the circumferential direction. Each of the protrusions 39 protruding to form a rib shape is disposed at the position where a predetermined clearance (for example, a clearance of approximately 3 to 5 mm) is created from the adjacent one, to the protrusion 39, of the brims 69 that are formed at the side edge of each of the frame bodies 67A.

When any pair of the flange 35C and the flange 36B and of the flange 36C and the flange 37B is stuck into the associated grooves 68 of the associated frame bodies 67A, an operator removes the bolt 67D of the fastener 67C from the associated nut and disconnects the second ends of the associated frame bodies 67A. After that, the operator inserts the jig 81 such as a flathead screwdriver into the clearance between the associated brim 69 on the side edge of the associated frame body 67A and the associated protrusion 39 through the opening 18A and the cutout window 18B disposed at the upper portion of the counterweight 12. Then, the operator pivots a tip of the jig 81 as a lever radially outward around the protrusion 39 by applying the principle of leverage and lifts the brim 69 of the associated frame body 67A so as to separate the groove 68 of the associated frame body 67A from the stuck outer peripheries of the associated pair of the flange 35C and the flange 36B or of the flange 36C and the flange 37B to detach the associated clamping coupler 67.

Each of the gasket insertion grooves 52 formed on the connecting surface 36E of the flange 36B and the connecting surface 36F of the flange 36C of the purification cylindrical body 36 has recessed portions 52A at three positions of the gasket insertion groove 52 in the circumferential direction. Each of the recessed portions 52A has a predetermined width (for example, approximately 15 mm that is slightly wider than a width of a tip of a flathead screwdriver) in the circumferential direction of the gasket insertion groove 52, and extends from the radially outer circumferential edge of the gasket insertion groove 52 to the inside of the gasket insertion groove 52. This configuration allows an operator to insert the jig 81 having a tip of a thin plate shape such as a flathead screwdriver into each of the recessed portions 52A. Then, the operator pivots the jig 81 around the radially outer end of the recessed portion 52A outwardly in the radial direction and pushes out the outer peripheral surface of the mica gasket 53 toward the operator (in a direction toward left in FIG. 15) from the gasket insertion groove 52 so as to take the mica gasket 53 out of the gasket insertion groove 52.

Therefore, even when the adhesive of some of the mica gaskets 53 evaporates owing to heat of the exhaust gas to cause the mica gasket 53 to stick into the associated gasket insertion groove 52, the operator is allowed to easily separate and remove the stuck mica gasket 53 from the associated gasket insertion groove 52 toward the operator. This also reduces the amount of the gasket insertion groove 52 is separated and removed from the gasket insertion groove 52, which shortens operation time for cleaning or the like.

The gasket insertion groove 52 is formed to be recessed axially inner than the end edges of the recessed portions 52A on axially inner sides. Mounting the mica gasket 53 by inserting the mica gasket 53 into the inner side of the gasket insertion groove 52 allows the outer peripheral surface and an inner peripheral surface of the mica gasket 53 to be securely in close contact with the inner peripheral surfaces of the gasket insertion groove 52 on a radially outer side and a radially inner side on an axially inner side, which reduces a likelihood of the exhaust gas leaking from the recessed portion 52A.

In the following description of a first modification of the embodiment, components of the forklift 10 and the exhaust gas purification apparatus 21 identical with those of the above-described embodiment of the present disclosure illustrated in FIGS. 1 to 17 will be provided with the identical reference numerals.

### [First modification of embodiment]

(A) For example, instead of the exhaust gas purification apparatus 21 of the above-described embodiment, an exhaust gas purification apparatus 85 according to a first modification of the embodiment may be applied. The exhaust gas purification apparatus 85 according to the first modification of the embodiment will now be described with reference to FIG. 18. As illustrated in FIG. 18, the exhaust gas purification apparatus 85 according to the first modification of the embodiment has a substantially identical configuration to the exhaust gas purification apparatus 21 of the above-described embodiment. However, the exhaust gas purification apparatus 85 according to the first modification of the exhaust gas purification apparatus 85 according to the first modification of the embodiment includes a pair of paired protrusions 86 protruded from the outer peripheral surface of the purification cylindrical body 36, one pair of the paired protrusions 86 at a position close to the upstream side flange 36B and the other pair of the paired protrusions 86 at a position close to the downstream side flange 36C, extending in the circumferential direction of the purification cylindrical body 36, instead of the pair of the protrusions 39 of the above-described embodiment.

The paired protrusions 86 of each pair are disposed on a same circumference, extending to a predetermined length from positions located close to the second ends of the frame bodies 67A having the fastener 67C of the clamping coupler 67, in a circumferentially opposite directions away from the fastener 67C. Each of the paired protrusions 86 protrudes to form a rib shape and is disposed at a position where a predetermined clearance (for example, a clearance of approximately 3 to 5 mm) is created from the adjacent one of the brims 69 that are formed at a side edge of each of the frame bodies 67A (see FIGS. 11 and 12). In other words, the paired protrusions 86 of each pair are disposed away from each other by a predetermined distance in the circumferential direction so as not to directly face the associated fastener 67C of the associated clamping coupler 67.

When any pair of the flange 35C and the flange 36B and of the flange 36C and the flange 37B is stuck into the associated grooves 68 of the associated frame bodies 67A, an operator removes the bolt 67D of the fastener 67C from the associated nut and disconnects the second ends of the associated frame bodies 67A. After that, the operator inserts the jig 81 such as a flathead screwdriver into the clearance between the associated brim 69 on the side edge of the associated frame body 67A and each of the associated paired protrusions 86 through the opening 18A and the cutout window 18B disposed at the upper portion of the counterweight 12. Then, the operator pivots a tip of the jig 81 as a lever radially outward around the protrusion 86 by applying the principle of leverage and lifts the brim 69 of the associated frame body 67A so as to separate the groove 68 of the associated frame body 67A from the stuck outer peripheries of the associated pair of the flange 35C and the flange 36B or of the flange 36C and the flange 37B to detach the associated clamping coupler 67.

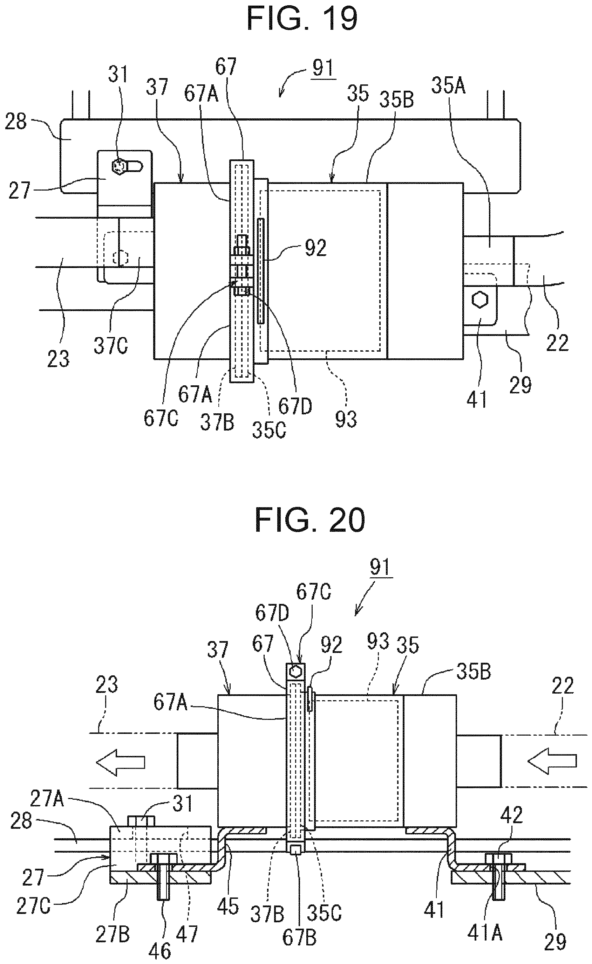

[Second modification not according to an embodiment of the invention] (B) For example, instead of the exhaust gas purification apparatus 21 of the above-described embodiment, an exhaust gas purification apparatus 91 according to a second modification not according to the embodiment may be applied. The exhaust gas purification apparatus 91 according to the second modification not according to the embodiment will be described with reference to FIGS. 19 and 20. As illustrated in FIGS. 19 and 20, the exhaust gas purification apparatus 91 according to the second modification not according to the embodiment has a substantially identical configuration to the exhaust gas purification apparatus 21 of the above-described embodiment.

However, in the exhaust gas purification apparatus 91 according to the second modification not according to the embodiment, the connecting surface 35D of the flange 35C of the upstream cylindrical body 35 (see FIG. 10) abuts against the connecting surface 37D of the flange 37B of the downstream cylindrical body 37 (see FIG. 7). Then, the annular clamping coupler 67 is attached to the radially outer peripheries of the flange 35C of the upstream cylindrical body 35 and the flange 37B of the downstream cylindrical body 37. The cylindrical portion 35B of the upstream cylindrical body 35 accommodates a DPF 93 instead of the diesel oxidation catalyst 25.

A protrusion 92 having a rib shape protrudes from the outer peripheral surface of the cylindrical portion 35B to a predetermined height, extending in parallel with a circumference of the cylindrical portion 35B at a position close to and on an axially inner side of the flange 35C. The protrusion 92 having a rib shape protrudes continuously in an arc of a predetermined central angle (for example, a central angle of approximately 60 degrees) in the circumferential direction around an axis of the cylindrical portion 35B. The protrusion 92 protruding to form a rib shape is disposed at a position where a predetermined clearance (for example, a clearance of approximately 3 to 5 mm) is created from an adjacent one, to the protrusion 92, of the brims 69 (see FIG. 11) that are formed at the side edges of the frame bodies 67A. The holding portion 36D (see FIGS. 4 and 5) may be provided to the cylindrical portion 35B of the upstream cylindrical body 35.

When the flanges 35C and 37B are stuck into the associated grooves 68 of the associated frame bodies 67A, an operator removes the bolt 67D of the fastener 67C from the nut and disconnects the second ends of the associated frame bodies 67A. After that, the operator inserts the jig 81 (see FIG. 11) such as a flathead screwdriver into the clearance between the protrusion 92 and the associated brim 69 on the side edge of the associated frame body 67A. Then, the operator pivots a tip of the jig 81 as a lever radially outward around the protrusion 92 by applying the principle of leverage and lifts the associated brim 69 of the frame body 67A so as to separate the groove 68 of the frame body 67A from the stuck outer peripheries of the flanges 35C and 37B to detach the clamping coupler 67.

(C) For example, each of the protrusions 39 may be provided over the entire circumference of the cylindrical portion 36A of the purification cylindrical body 36. This configuration allows an operator, even when the fastener 67C of the associated clamping coupler 67 is disposed at any position in the circumferential direction of the clamping coupler 67, to insert the jig 81 (see FIG. 11) such as a flathead screwdriver into the clearance between the associated brim 69 on the side edge of the associated frame body 67A and the associated protrusion 39. Then, the operator pivots a tip of the jig 81 as a lever radially outward around the protrusion 39 by applying the principle of leverage and lifts the brim 69 of the associated frame body 67A so as to separate the groove 68 of the associated frame body 67A from the stuck outer peripheries of the associated pair of the flange 35C and the flange 36B or of the flange 36C and the flange 37B to detach the associated clamping coupler 67.

(D) The fixing structure of the piping according to the above-described embodiment of the present disclosure is applied to the forklift 10. However, the fixing structure of the piping of the present disclosure may be applied to other industrial vehicles (such as a shovel loader), instead.

### Reference Signs List

11 vehicle body
12 counterweight
15 engine
18A opening
18B cutout window
21, 85, 91 exhaust gas purification apparatus
22 exhaust pipe
26, 93 diesel particulate filter (DPF) (purification member)
27 mount base (mount base portion)
28 mount
31 bolt (fixing bolt)
35 upstream cylindrical body
35C, 37B flange
35D, 36E, 36F, 37D connecting surface
36 purification cylindrical body
36B upstream side flange
36C downstream side flange
36D holding portion
37 downstream cylindrical body
39, 86, 92 protrusion
41 support member (first support)
45 support member (second support)
47 long hole
51 insertion rib
52 gasket insertion groove
52A recessed portion
53 mica gasket
59 insertion groove
67 clamping coupler
67A frame body
67C fastener
67D bolt
68 groove
69 brim

## Claims

1. A vehicle body (11) comprising a piping with a fixing structure, the piping comprising:
an upstream cylindrical body (35) disposed in an exhaust gas passage (22) of an engine (15) mounted on the vehicle body (11);
a downstream cylindrical body (37) disposed downstream of the upstream cylindrical body (35);
an annular upstream flange (35C) having a flat connecting surface (35D) provided over an entire circumference of an end of the upstream cylindrical body (35) adjacent to the downstream cylindrical body (37);
an annular downstream flange (37B) having a flat connecting surface (37D) provided over an entire circumference of an end of the downstream cylindrical body (37) adjacent to the upstream cylindrical body (35); and
a pair of clamping couplers (67) each including a plurality of clamping pieces (67A) having respective grooves (68) with a U-shaped or V-shaped cross section, the plurality of clamping pieces (67A) of each clamping coupler (67) being formed in an annular shape with the grooves (68) facing inward;
**characterized by**:
a purification cylindrical body (36) disposed inside a counterweight (12) on a rear side of the vehicle body (11) and accommodating a purification member (26, 93) that purifies an exhaust gas flowing through the purification member(26, 93);
an opening (18A) formed at a predetermined position of the counterweight (12) to penetrate through the counterweight (12); and
rib-shaped protrusions (39, 86), each of the protrusions (39, 86) provided on an outer peripheral surface of the purification cylindrical body (36), each protrusion (39, 86) protruding to a predetermined height in parallel with a side edge of a respective one of the plurality of clamping pieces (67A) of each clamping coupler (67) so as to form a predetermined clearance between the side edge of the respective clamping piece (67A) of each clamping coupler (67) and the protrusion (39, 86) outside the side edge of the respective clamping piece (67A) of each clamping coupler (67), wherein
the purification cylindrical body (36) is interposed between the upstream cylindrical body (35) and the downstream cylindrical body (37) and includes a pair of annular flanges (36B, 36C) each having a flat connecting surface (36E, 36F) provided over an entire circumference of each of axial ends of the purification cylindrical body (36),
a pair of an upstream side flange (36B) of the purification cylindrical body (36) and the upstream flange (35C) and a pair of a downstream side flange (36C)of the purification cylindrical body (36) and the downstream flange (37B) are interposed inside the grooves (68) of the pair of clamping couplers (67), respectively, and attachably and detachably connected by the pair of clamping couplers (67), and
the opening (18A) has a size that allows, through the opening (18A), the pair of clamping couplers (67) to be attached and detached, and the purification cylindrical body (36) to pass.

2. The vehicle body (11) according to claim 1, **characterized in that**
the pair of clamping couplers (67) each includes a fastener (67C) that fastens ends of a pair of the clamping pieces (67A) facing to each other, with a bolt (67D), and
each protrusion (39, 86) protrudes to the predetermined height with respect to the side edge of each of the facing ends of the pair of clamping couplers (67) that are fastened to each other with the bolt (670).

3. The vehicle body (11) according to claim 2, **characterized in that**
each protrusion (39, 86) protrudes continuously in a range of a predetermined central angle in a circumferential direction of the purification cylindrical body (36) so as to protrude to the predetermined height on both sides of the fastener (67C) in the circumferential direction.

4. The vehicle body (11) according to any of claims 1 to 3, **characterized in that**
the plurality of the clamping pieces (67A) of each clamping coupler (67) each includes a brim (69) outwardly bent from at least the side edge of the clamping piece (67A) that faces the corresponding protrusion (39, 86).

5. The vehicle body (11) according to any of claims 1 to 4, **characterized by**:
a first support (41) fixed to the vehicle body (11) to support the upstream cylindrical body (35); and
a second support (45) having one end fixed to a mount base (27) bolted to the vehicle body (11) with a fixing bolt (31), and the other end fixed to the downstream cylindrical body (37) to support the downstream cylindrical body (37), wherein
the mount base (27), the second support (45), and the downstream cylindrical body (37) are integrally slidable in an axial direction of the purification cylindrical body (36) by loosening the fixing bolt (31) through the opening (18A).

6. The vehicle body (11) according to any of claims 1 to 5, **characterized in that**
the connecting surface (36E) of the upstream side flange (36B) and the connecting surface (36F) of the downstream side flange (36C) of the purification cylindrical body (36) each includes:
a gasket insertion groove (52) having a ring shape in a front view, being recessed to a predetermined depth in an axially inward direction of the purification cylindrical body (36), and provided over an entire circumference of the purification cylindrical body (36), through which a gasket (53) is inserted; and
a recessed portion (52A) disposed at a predetermined position of the gasket insertion groove (52) in a circumferential direction of the gasket insertion groove (52), having a predetermined width in the circumferential direction of the gasket insertion groove (52), and cut out from a radially outer circumferential edge of the gasket insertion groove (52) to an inside of the gasket insertion groove (52), and
the gasket (53) includes a mica gasket.

7. The vehicle body (11) according to claim 6, **characterized in that**
the gasket insertion groove (52) is recessed axially inner than an end edge of the recessed portion (52A) on an axially inner side of the gasket insertion groove (52).

8. The vehicle body (11) according to claim 6 or 7, **characterized in that**
the recessed portion (52A) is formed so that a radially outer side surface of the recessed portion (52A) is inclined in the axially inward direction and in a radially inward direction of the purification cylindrical body (36).

9. The vehicle body (11) according to any of claims 6 to 8, **characterized in that**
the recessed portion (52A) is provided at a plurality of positions in the circumferential direction of the gasket insertion groove (52).

## Patentansprüche

1. Fahrzeugkarosserie (11) mit einer Rohrleitung mit einer Befestigungsstruktur, wobei die Rohrleitung Folgendes umfasst:
einen stromaufwärts gelegenen zylindrischen Körper (35), der in einem Abgaskanal (22) eines an der Fahrzeugkarosserie (11) montierten Motors (15) angeordnet ist;
einen stromabwärts gelegenen zylindrischen Körper (37), der stromabwärts des stromaufwärts gelegenen zylindrischen Körpers (35) angeordnet ist;
einen ringförmigen, stromaufwärts gelegenen Flansch (35C), der eine flache Verbindungsfläche (35D) aufweist, die über einen gesamten Umfang eines Endes des stromaufwärts gelegenen zylindrischen Körpers (35) angrenzend an den stromabwärts gelegenen zylindrischen Körper (37) vorgesehen ist;
einen ringförmigen stromabwärts gelegenen Flansch (37B), der eine flache Verbindungsfläche (37D) aufweist, die über den gesamten Umfang eines Endes des stromabwärts gelegenen zylindrischen Körpers (37) angrenzend an den stromaufwärts gelegenen zylindrischen Körper (35) vorgesehen ist; und
ein Paar von Klemmverbindungsstücken (67), die jeweils eine Vielzahl von Klemmteilen (67A) mit entsprechenden Nuten (68) mit einem U-förmigen oder V-förmigen Querschnitt aufweisen, wobei die Vielzahl von Klemmteilen (67A) jedes Klemmverbindungsstücks (67) in einer ringförmigen Form gebildet wird, wobei die Nuten (68) nach innen gewandt sind;
**gekennzeichnet durch**:
einen zylindrischen Reinigungskörper (36), der innerhalb eines Gegengewichts (12) auf einer Heckseite der Fahrzeugkarosserie (11) angeordnet ist und ein Reinigungselement (26, 93) aufnimmt, das ein durch das Reinigungselement (26, 93) strömendes Abgas reinigt;
eine Öffnung (18A), die an einer vorbestimmten Position des Gegengewichts (12) gebildet wird, um durch das Gegengewicht (12) hindurch zu ragen; und
rippenförmige Vorsprünge (39, 86), wobei jeder der Vorsprünge (39, 86) an einer äußeren Umfangsfläche des zylindrischen Reinigungskörpers (36) vorgesehen ist und jeder Vorsprung (39, 86) bis zu einer vorbestimmten Höhe parallel zu einer Seitenkante eines jeweiligen der Vielzahl von Klemmteilen (67A) jedes Klemmverbindungsstücks (67) vorsteht, so dass ein vorbestimmtes Spiel zwischen der Seitenkante des jeweiligen Klemmteils (67A) jedes Klemmverbindungsstücks (67) und dem Vorsprung (39, 86) außerhalb der Seitenkante des jeweiligen Klemmteils (67A) jedes Klemmverbindungsstücks (67) gebildet wird, wobei
der zylindrische Reinigungskörper (36) zwischen dem stromaufwärts gelegenen zylindrischen Körper (35) und dem stromabwärts gelegenen zylindrischen Körper (37) angeordnet ist und ein Paar von ringförmigen Flanschen (36B, 36C) aufweist, die jeweils eine flache Verbindungsfläche (36E, 36F) aufweisen, die über einen gesamten Umfang jedes der axialen Enden des zylindrischen Reinigungskörpers (36) vorgesehen ist,
ein Paar von stromaufwärts gelegenen Seitenflanschen (36B) des zylindrischen Reinigungskörpers (36) und der stromaufwärts gelegene Flansch (35C) und ein Paar von stromabwärts gelegenen Seitenflanschen (36C) des zylindrischen Reinigungskörpers (36) und der stromabwärts gelegene Flansch (37B) jeweils innerhalb der Nuten (68) des Paares von Klemmverbindungsstücken (67) zwischengeschaltet sind und durch das Paar von Klemmverbindungsstücken (67) verbindbar und lösbar sind, und
die Öffnung (18A) eine Größe aufweist, die es ermöglicht, durch die Öffnung (18A) das Paar von Klemmverbindungsstücken (67) zu befestigen und zu lösen und dass der zylindrische Reinigungskörper (36) sie durchdringt.

2. Fahrzeugkarosserie (11) nach Anspruch 1, **dadurch gekennzeichnet, dass**
das Paar von Klemmverbindungsstücken (67) jeweils eine Befestigung (67C) aufweist, die die einander zugewandten Enden eines Paares von Klemmteilen (67A) mit einem Bolzen (67D) befestigt, und
jeder Vorsprung (39, 86) auf die vorbestimmte Höhe in Bezug auf die Seitenkante jedes der gegenüberliegenden Enden des Paares von Klemmverbindungsstücken (67), die mit den Bolzen (67D) aneinander befestigt sind, vorsteht.

3. Fahrzeugkarosserie (11) nach Anspruch 2, **dadurch gekennzeichnet, dass**
jeder Vorsprung (39, 86) kontinuierlich in einem Bereich eines vorbestimmten Zentralwinkels in einer Umfangsrichtung des zylindrischen Reinigungskörpers (36) vorsteht, so dass er auf beiden Seiten der Befestigung (67C) in der Umfangsrichtung auf die vorbestimmte Höhe vorsteht.

4. Fahrzeugkarosserie (11) nach einem der Ansprüche 1 bis 3, **dadurch gekennzeichnet, dass**
die Vielzahl von Klemmteilen (67A) jedes Klemmverbindungsstücks (67) jeweils einen Rand (69) aufweist, der von wenigstens der dem entsprechenden Vorsprung (39, 86) gegenüberliegenden Seitenkante des Klemmteils (67A) nach außen gebogen ist.

5. Fahrzeugkarosserie (11) nach einem der Ansprüche 1 bis 4, **gekennzeichnet durch**:
ein erstes Stützelement (41), das an der Fahrzeugkarosserie (11) befestigt ist, um den stromaufwärts gelegenen zylindrischen Körper (35) zu stützen; und
ein zweites Stützelement (45), dessen eines Ende an einer Montagebasis (27) befestigt ist, die mit einem Befestigungsbolzen (31) an der Fahrzeugkarosserie (11) angeschraubt ist, und dessen anderes Ende an dem stromabwärts gelegenen zylindrischen Körper (37) befestigt ist, um den stromabwärts gelegenen zylindrischen Körper (37) zu stützen, wobei
die Montagebasis (27), das zweite Stützelement (45) und der stromabwärts gelegene zylindrische Körper (37) in einer axialen Richtung des zylindrischen Reinigungskörpers (36) durch Lösen des Befestigungsbolzens (31) durch die Öffnung (18A) integral verschiebbar sind.

6. Fahrzeugkarosserie (11) nach einem der Ansprüche 1 bis 5, **dadurch gekennzeichnet, dass**
die Verbindungsfläche (36E) des stromaufwärts gelegenen Seitenflansches (36B) und die Verbindungsfläche (36F) des stromabwärts gelegenen Seitenflansches (36C) des zylindrischen Reinigungskörpers (36) jeweils Folgendes umfassen:
eine Dichtungseinsatznut (52), die in einer Vorderansicht eine Ringform aufweist, in einer vorbestimmten Tiefe in einer axial nach innen gerichteten Richtung des zylindrischen Reinigungskörpers (36) vertieft ist und über einen gesamten Umfang des zylindrischen Reinigungskörpers (36) vorgesehen ist, durch die eine Dichtung (53) eingesetzt ist; und
einen Vertiefungsabschnitt (52A), der an einer vorbestimmten Position der Dichtungseinsatznut (52) in einer Umfangsrichtung der Dichtungseinsatznut (52) angeordnet ist, eine vorbestimmte Breite in der Umfangsrichtung der Dichtungseinsatznut (52) aufweist und von einem radial äußeren Umfangsrand der Dichtungseinsatznut (52) zu einer Innenseite der Dichtungseinsatznut (52) ausgeschnitten ist, und
die Dichtung (53) eine Glimmerdichtung enthält.

7. Fahrzeugkarosserie (11) nach Anspruch 6, **dadurch gekennzeichnet, dass**
die Dichtungseinsatznut (52) an einer axial inneren Seite der Dichtungseinsatznut (52) axial weiter innen als eine Endkante des Vertiefungsabschnitts (52A) vertieft ist.

8. Fahrzeugkarosserie (11) nach Anspruch 6 oder 7, **dadurch gekennzeichnet, dass**
der Vertiefungsabschnitt (52A) derart ausgebildet ist, dass eine radial äußere Seitenfläche des Vertiefungsabschnitts (52A) in axialer Richtung nach innen und in einer radial nach innen gerichteten Richtung des zylindrischen Reinigungskörpers (36) geneigt ist.

9. Fahrzeugkarosserie (11) nach einem der Ansprüche 6 bis 8, **dadurch gekennzeichnet, dass**
der Vertiefungsabschnitt (52A) an einer Vielzahl von Positionen in der Umfangsrichtung der Dichtungseinsatznut (52) vorgesehen ist.

## Revendications

1. Carrosserie de véhicule (11) comprenant une tuyauterie avec une structure de fixation, la tuyauterie comprenant :
un corps cylindrique en amont (35) disposé dans un passage de gaz d'échappement (22) d'un moteur (15) monté sur la carrosserie de véhicule (11) ;
un corps cylindrique en aval (37) disposé en aval du corps cylindrique en amont (35) ;
une bride annulaire en amont (35C) ayant une surface de raccordement plate (35D) prévue sur toute la circonférence d'une extrémité du corps cylindrique en amont (35) adjacent au corps cylindrique en aval (37) ;
une bride annulaire en aval (37B) ayant une surface de raccordement plate (37D) prévue sur toute la circonférence d'une extrémité du corps cylindrique en aval (37) adjacent au corps cylindrique en amont (35) ; et
une paire de coupleurs de serrage (67) comprenant chacun une pluralité de pièces de serrage (67A) ayant des rainures (68) respectives avec une section transversale en forme de U ou en forme de V, la pluralité de pièces de serrage (67A) de chaque coupleur de serrage (67) étant formée selon une forme annulaire avec les rainures (68) orientées vers l'intérieur ;
**caractérisée par** :
un corps cylindrique de purification (36) disposé à l'intérieur d'un contrepoids (12) sur un côté arrière de la carrosserie de véhicule (11) et logeant un élément de purification (26, 93) qui purifie un gaz d'échappement s'écoulant dans l'élément de purification (26, 93) ;
une ouverture (18A) formée dans une position prédéterminée du contrepoids (12) pour pénétrer à travers le contrepoids (12) ; et
des saillies en forme de nervure (39, 86), chacune des saillies (39, 86) étant prévue sur une surface périphérique externe du corps cylindrique de purification (36), chaque saillie (39, 86) faisant saillie sur une hauteur prédéterminée parallèle à un bord latéral d'une pièce respective de la pluralité de pièces de serrage (67A) de chaque coupleur de serrage (67) afin de former un jeu prédéterminé entre le bord latéral de la pièce de serrage (67A) respective de chaque coupleur de serrage (67) et la saillie (39, 86) à l'extérieur du bord latéral de la pièce de serrage (67A) respective de chaque coupleur de serrage (67), dans lequel :
le corps cylindrique de purification (36) est intercalé entre le corps cylindrique en amont (35) et le corps cylindrique en aval (37) et comprend une paire de brides annulaires (36B, 36C) ayant chacune une surface de raccordement plate (36E, 36F) prévue sur toute la circonférence de chacune des extrémités axiales du corps cylindrique de purification (36),
une paire composée d'une bride du côté en amont (36B) du corps cylindrique de purification (36) et de la bride en amont (35C) et une paire composée d'une bride du côté en aval (36C) du corps cylindrique de purification (36) et de la bride en aval (37B) sont intercalées entre les rainures (68) de la paire de coupleurs de serrage (67), respectivement et raccordées de manière pouvant être fixées et détachées par la paire de coupleurs de serrage (67), et
l'ouverture (18A) a une taille qui permet, par le biais de l'ouverture (18A), à la paire de coupleurs de serrage (67) d'être fixée et détachée, et au corps cylindrique de purification (36) de passer.

2. Carrosserie de véhicule (11) selon la revendication 1, **caractérisée en ce que** :
la paire de coupleurs de serrage (67) comprennent chacun une fixation (67C) qui fixe les extrémités d'une paire de pièces de serrage (67A) se faisant face, avec un boulon (67D), et
chaque saillie (39, 86) fait saillie sur la hauteur prédéterminée par rapport au bord latéral de chacune des extrémités se faisant face de la paire de coupleurs de serrage (67) qui sont fixées entre elles avec le boulon (67D).

3. Carrosserie de véhicule (11) selon la revendication 2, **caractérisée en ce que** :
chaque saillie (39, 86) faisant saillie de manière continue dans une plage d'un angle central prédéterminé dans une direction circonférentielle du corps cylindrique de purification (36) afin de faire saillie sur la hauteur prédéterminée des deux côtés de la fixation (67C) dans la direction circonférentielle.

4. Carrosserie de véhicule (11) selon l'une quelconque des revendications 1 à 3, **caractérisée en ce que** :
la pluralité de pièces de serrage (67A) de chaque coupleur de serrage (67) comprennent chacune un bord (69) plié vers l'extérieur à partir d'au moins le bord latéral de la pièce de serrage (67A) qui fait face à la saillie (39, 86) correspondante.

5. Carrosserie de véhicule (11) selon l'une quelconque des revendications 1 à 4, **caractérisée par** :
un premier support (41) fixé sur la carrosserie de véhicule (11) pour supporter le corps cylindrique en amont (35) ; et
un second support (45) ayant une extrémité fixée sur une base de support (27) boulonnée sur la carrosserie de véhicule (11) avec un boulon de fixation (31), et l'autre extrémité fixée sur le corps cylindrique en aval (37) pour supporter le corps cylindrique en aval (37), dans laquelle :
la base de support (27), le second support (45) et le corps cylindrique en aval (37) peuvent coulisser de manière solidaire dans une direction axiale du corps cylindrique de purification (36) en desserrant le boulon de fixation (31) par le biais de l'ouverture (18A).

6. Carrosserie de véhicule (11) selon l'une quelconque des revendications 1 à 5, **caractérisée en ce que** :
la surface de raccordement (36E) de la bride du côté en amont (36B) et la surface de raccordement (36F) de la bride du côté en aval (36C) du corps cylindrique de purification (36) comprennent chacune :
une rainure d'insertion de joint (52) ayant une forme annulaire sur une vue de face, qui est enfoncée à une profondeur prédéterminée dans une direction axialement vers l'intérieur du corps cylindrique de purification (36), et prévue sur toute la circonférence du corps cylindrique de purification (36), à travers laquelle un joint (53) est inséré ; et
une partie évidée (52A) disposée dans une position prédéterminée de la rainure d'insertion de joint (52) dans une direction circonférentielle de la rainure d'insertion de joint (52) ayant une largeur prédéterminée dans la direction circonférentielle de la rainure d'insertion de joint (52) et coupée d'un bord circonférentiel radialement externe de la rainure d'insertion de joint (52) à un intérieur de la rainure d'insertion de joint (52), et
le joint (53) comprend un joint en mica.

7. Carrosserie de véhicule (11) selon la revendication 6, **caractérisée en ce que** :
la rainure d'insertion de joint (52) est évidée axialement vers l'intérieur par rapport à un bord d'extrémité de la partie évidée (52A) sur un côté axialement interne de la rainure d'insertion de joint (52).

8. Carrosserie de véhicule (11) selon la revendication 6 ou 7, **caractérisée en ce que** :
la partie évidée (52A) est formée de sorte qu'une surface latérale radialement externe de la partie évidée (52A) est inclinée dans la direction axialement vers l'intérieur et dans une direction radialement vers l'intérieur du corps cylindrique de purification (36).

9. Carrosserie de véhicule (11) selon l'une quelconque des revendications 6 à 8, **caractérisée en ce que** :
la partie évidée (52A) est prévue dans une pluralité de positions dans la direction circonférentielle de la rainure d'insertion de joint (52).
